# EUROPEAN PATENT SPECIFICATION

(11) **EP 4 336 801 B1**
(45) Date of publication and mention of the grant of the patent: **26.11.2025**
(21) Application number: 22831289.8
(22) Date of filing: 30.03.2022
(51) Int. Cl.: H04W 12/55, H04W 12/08, H04W 12/0431, H04L 9/40, H04L 12/28, H04M 1/72415, H04L 9/08

(54) **DEVICE CONTROL METHOD AND APPARATUS**
VERFAHREN UND VORRICHTUNG ZUR GERÄTESTEUERUNG
PROCÉDÉ ET APPAREIL DE COMMANDE DE DISPOSITIF

(30) Priority: 30.06.2021 CN 202110736672
(43) Date of publication of application: 13.03.2024
(73) Proprietor: Huawei Technologies Co., Ltd., Shenzhen, Guangdong 518129 (CN)
(72) Inventor: GAN, Lu, Shenzhen, Guangdong 518129 (CN); SHI, Rui, Shenzhen, Guangdong 518129 (CN); PAN, Shiran, Shenzhen, Guangdong 518129 (CN)
(74) Representative: Goddar, Heinz J.
(86) International application number: PCT/CN2022/084073
(87) International publication number: WO 2023/273458

(56) References cited:
- WO-A1-2017/053048
- CN-A- 105 141 584
- CN-A- 108 712 246
- CN-A- 110 706 379
- CN-A- 112 987 581
- KR-B1- 102 072 725
- US-A1- 2006 159 268
- US-A1- 2017 359 343
- US-A1- 2018 330 368

## Description

This application claims priority to Chinese Patent Application No. 202110736672.9, filed with the China National Intellectual Property Administration on June 30, 2021 and entitled "DEVICE CONTROL METHOD AND APPARATUS.

### TECHNICAL FIELD

This application relates to the field of internet of things, and in particular, to a device control method and an apparatus.

### BACKGROUND

With development of internet of things (internet of things, IoT) technologies, more IoT devices such as air conditioners, televisions, and sound boxes can be connected to other devices such as mobile phones and computers, to control these IoT devices through device linkage.

Specifically, when a device like a first terminal needs to control an IoT device, the device may request a cloud to allocate a corresponding key (for example, a first key), so that the first terminal controls the IoT device by using the first key. In this case, if the first terminal wants to authorize a control permission of the IoT device to another device, for example, a second terminal whose cloud account is different from that of the first terminal, the first terminal may request the cloud to allocate a corresponding key (for example, a second key) to the second terminal, so that the second terminal can control the IoT device by using the second key, for authorization of the control permission.

However, when the IoT device is connected to the second terminal but is not connected to another device (for example, the first terminal or the cloud), if the first terminal cancels the authorization, that is, the second terminal does not have a control permission of the IoT device, but the second terminal does not disconnect from the IoT device, the IoT device is hijacked by the second terminal.

US 2017/0359343 A1 discloses a system and a method for securing communications between Internet of Things (IoT) devices and user devices. The method includes establishing a connection to an IoT device over a first secured communication channel, wherein the IoT device is communicatively connected to a wireless network using at least login credentials received from a user device over a second communication channel, wherein the user device is communicatively connected to the wireless network; receiving, from the IoT device, a unique identifier of the user device; and associating the user device with the IoT device, wherein only user devices that are associated with the IoT device can control the IoT device.

KR102072725B1 relates to a method for easily performing a linkage process between a user terminal and an Internet of Things device through another user terminal already linked with the Internet of Things device, and to a management server and system performing the method.

US 2018/0330368 A1 discloses methods of secure authenticated passwordless communication executed by a resource client device that include (a) receiving an alternate address from a user, (b) sending a registration request to a resource server, (c) receiving from the user a passcode, (d) sending a verification request to the resource server, and (e) receiving from the resource server an access token. The alternate address is an address to communicate with the user via an alternate communication channel. The registration request includes the alternate address and a unique client device identifier associated with the resource client device. The passcode is generated by the resource server and sent to the user at the alternate address via the alternate communication channel. The verification request includes the passcode. The access token is received after sending the verification request. The resource client device may use the access token in future resource requests to the resource server.

### SUMMARY

Embodiments of this application provide a device control method and an apparatus, so that when a second terminal does not have a control permission of an IoT device, the IoT device is not hijacked by the second terminal.

According to a first aspect, a device control method is provided. The method includes: A first device periodically sends first information to a second device. Then, if the first device determines that the second device does not obtain a first control key, the first device disconnects from the second device. The first device is bound to a third device, the first information is used to notify the second device to obtain a first control key, and the first control key is a latest control key used by the second device to establish a session with the first device.

Based on the method in the first aspect, it can be learned that, when an IoT device (for example, the first device) is bound to a device (for example, the third device), that is, the third device has a control permission of the first device, if another device like the second device wants to continue to control the first device, the first device may initiate a control permission check to the second device, that is, send the first information, to indicate the second device to obtain a latest control key (for example, the first control key). **In** this way, if the second device does not obtain the first control key, that is, does not have the control permission of the first device, the first device may disconnect from the second device, so as to prevent the first device from being hijacked by the second device.

**In** a possible design solution, before the first device sends the first information to the second device, the method in the first aspect may further include: The first device receives second information from the third device, to be bound to the third device based on the second information. The second information may indicate that the first device is to be bound to the third device. **In** this way, the first device may be accurately bound to, based on the second information, a device to which the first device is to be bound, for example, the third device, to avoid incorrect binding.

Optionally, that the first device is bound to the third device based on the second information may include: The first device determines, based on the second information, that a correspondence with the first device is not established, to establish a first correspondence between the first device and the third device. It can be learned that, if the first device is not currently bound to another device, the first device is bound to the third device. In other words, the third device is a device that is first bound to the first device, that is, a device that is first having a control permission (or a primary control permission) of the first device. In this way, if another device wants to control the first device subsequently, the first device may initiate a control permission check to the another device based on the fact that the third device has the primary control permission, instead of initiating a control permission check to the third device, so as to avoid an incorrect check.

Further, the second information may include an identifier of the first device, an identifier of a first user, and a second control key, where the first user is a user corresponding to the third device, the correspondence with the first device is a correspondence between the identifier of the first device and an identifier of a user, the first correspondence is a correspondence between the identifier of the first device and the identifier of the first user, and the second control key is used by the third device to establish a session with the first device. In other words, that the first device is bound to the third device is that the first device is bound to the identifier of the first user (for example, an account of the first user) corresponding to the third device. In this case, if the first user logs in to a same account by using different devices, the first user may still control the first device by using the binding relationship with the first user, without performing re-registration and re-binding, so as to improve user experience.

In a possible design solution, before the first device sends the first information to the second device, the method in the first aspect may further include: The first device receives third information from the second device. The third information is used by the second device to request to control the first device.

Optionally, the third information may include an identifier of a second user and the identifier of the first device, and the second user is a user corresponding to the second device. In this way, the first device may determine that the identifier of the second user corresponding to the identifier of the first device in the third information is different from the identifier of the first user corresponding to the identifier of the first device in the first correspondence, to determine that the second device is not a device that is first having the control permission of the first device, so as to determine to initiate a control permission check to the second device (for example, send the first information to the second device), instead of initiating a control permission check to another device, thereby avoiding an incorrect check.

In a possible design solution, the first information may include a check value, and the check value may be used to determine the first control key.

Optionally, the first control key is determined based on the check value, a second control key, and an identifier of a second user. The second control key is used by the third device to establish a session with the first device, and the second user is a user corresponding to the second device. It can be learned that, because the second control key is locally stored in the first device, and the first device does not send the second control key to the second device, the second device cannot determine the first control key, so as to prevent the second device from hijacking the first device because the second device determines the first control key when having no control permission.

According to a second aspect, a device control method is provided. The method includes: A second device periodically receives first information from a first device, and sends fourth information to a fourth device. The first information is used to notify the second device to obtain a first control key, and the first control key is a latest control key used by the second device to establish a session with the first device. The fourth information is used to request the fourth device to determine the first control key.

With reference to the method in the first aspect and the method in the second aspect, it can be learned that, because the second device cannot determine the first control key, but can only request the fourth device to determine the first control key, the second device can be prevented from hijacking the first device because the second device determines the first control key when having no control permission.

In a possible design solution, the first information may include a check value, and the check value is used by the fourth device to determine the first control key.

Optionally, the fourth information may include an identifier of the first device, an identifier of a second user, and the check value. The second user is a user corresponding to the second device. It should be understood that, with reference to the method in the second aspect and a method in the following fourth aspect, it can be learned that, when the fourth device stores the foregoing first correspondence, the fourth device may determine that the identifier of the second user corresponding to the identifier of the first device in the fourth information is different from the identifier of the first user corresponding to the identifier of the first device in the first correspondence, so as to determine that the second user is not a device that is first having a control permission of the first device. In this way, the fourth device may further determine whether the second user has the control permission of the first device, or whether the first user cancels authorization of the control permission of the first device, so as to determine, based on whether the first device cancels the authorization, whether to generate a second control key, thereby avoiding generating the second control key by mistake, for example, avoiding a case in which the second control key is still generated when the first device cancels the authorization.

Optionally, after the second device sends the fourth information to the fourth device, the method in the second aspect may further include: The second device receives the first control key from the fourth device, to send the first control key to the first device, so that the second device can continue to control the first device when having a control permission of the first device.

In a possible design solution, before the second device receives the first information from the first device, the second device sends third information to the first device. The third information is used by the second device to request to control the first device.

Optionally, the third information may include the identifier of the second user and the identifier of the first device, and the second user is the user corresponding to the second device.

In addition, for other technical effects of the method in the second aspect, refer to the technical effects of the method in the first aspect. Details are not described herein again.

According to a third aspect, an electronic device is provided. The electronic device includes one or more processors, a memory, and a communication module. The memory stores one or more computer programs, the one or more computer programs include instructions, and when the instructions are executed by the electronic device, the electronic device is enabled to perform the method in any one of the first and second aspects.

According to a fourth aspect, a computer-readable storage medium is provided, including a computer program or instructions. When the computer program or the instructions are run on a computer, the computer is enabled to perform the method in any one of the first aspect to the fourth aspect.

According to an fifth aspect, a computer program product is provided, including a computer program or instructions. When the computer program or the instructions are run on a computer, the computer is enabled to perform the method in any one of the first aspect to the fourth aspect.

According to a sixth aspect, a chip system is provided. The chip system is applied to an electronic device including a memory and a communication module. The chip system includes one or more interface circuits and one or more processors. The interface circuit and the processor are interconnected by using a line. The interface circuit is configured to receive a signal from the memory of the electronic device, and send the signal to the processor, where the signal includes computer instructions stored in the memory. When the processor executes the computer instructions, the electronic device performs the method in any one of the first aspect to the fourth aspect.

### BRIEF DESCRIPTION OF DRAWINGS

FIG. 1 is a schematic diagram of an architecture of an internet of things system according to an embodiment of this application;
FIG. 2 is a schematic diagram of a structure of a terminal device (for example, a mobile phone) according to an embodiment of this application;
FIG. 3 is a schematic diagram of a structure of an IoT device (for example, a sound box) according to an embodiment of this application;
FIG. 4 is a diagram of an application scenario of a device control method according to an embodiment of this application;
FIG. 5(a) and FIG. 5(b) are a diagram 1 of an interaction interface according to an embodiment of this application;
FIG. 6A is a diagram 2 of an interaction interface according to an embodiment of this application;
FIG. 6B is a diagram 3 of an interaction interface according to an embodiment of this application;
FIG. 6C is a diagram 4 of an interaction interface according to an embodiment of this application;
FIG. 7(a) and FIG. 7(b) are a diagram 5 of an interaction interface according to an embodiment of this application;
FIG. 8(a) and FIG. 8(b) are a diagram 6 of an interaction interface according to an embodiment of this application;
FIG. 9(a) and FIG. 9(b) are a diagram 7 of an interaction interface according to an embodiment of this application;
FIG. 10(a) and FIG. 10(b) are a diagram 8 of an interaction interface according to an embodiment of this application;
FIG. 11(a) and FIG. 11(b) are a diagram 9 of an interaction interface according to an embodiment of this application;
FIG. 12(a) and FIG. 12(b) are a diagram 10 of an interaction interface according to an embodiment of this application;
FIG. 13A and FIG. 13B are a schematic flowchart 1 of a device control method according to an embodiment of this application;
FIG. 14 is a schematic flowchart 2 of a device control method according to an embodiment of this application; and
FIG. 15 is a schematic diagram of a structure of an electronic device according to an embodiment of this application.

### DESCRIPTION OF EMBODIMENTS

The following first describes a physical network system in the conventional technology.

In the conventional technology, the physical network system may usually include a first terminal, a second terminal, an IoT device, and a cloud.

If the first terminal wants to control the IoT device, the first terminal may be bound to the IoT device, and request the cloud to allocate a corresponding key (for example, a first key), so that the first terminal establishes a session between the first terminal and the IoT device by using the first key, to control the IoT device by using the session. In this case, if the first terminal wants to authorize a control permission of the IoT device to another device, for example, the second terminal that is logged in to by using a cloud account different from a cloud account of the first terminal, the first terminal may indicate the second terminal to be bound to the IoT device, and request the cloud to allocate a corresponding key (for example, a second key) to the second terminal, or the first terminal may directly allocate a corresponding key (for example, a second key) to the second terminal, so that the second terminal can establish a session with the IoT device by using the second key, to control the IoT device by using the session, for authorization of the control permission.

After the second terminal obtains the authorization of the control permission of the IoT device, the second terminal may connect to and control the IoT device. However, when the IoT device is connected to the second terminal and is controlled by the second device, if the first terminal wants to cancel the authorization, because the IoT device is connected only to the second terminal (for example, the IoT device is a Bluetooth device and does not have a capability of directly communicating with the cloud), and the IoT device can communicate only with the second terminal and can receive a control instruction only from the second terminal, the first terminal cannot indicate the IoT device to disconnect from the second terminal, and the second terminal may keep being connected to the IoT device, and control the IoT device. Consequently, the IoT device is hijacked by the second terminal.

Currently, to resolve a problem that the IoT device is hijacked by the second terminal, the IoT device can disconnect from the second terminal only through a manual notification. For example, a user of the first terminal manually notifies a user of the second terminal (by sending an SMS message, making a call, or notifying the user face to face) to disconnect the second terminal from the IoT device, so that the user of the second terminal performs a user operation of disconnecting the second terminal from the IoT device, or the user of the second terminal performs a user operation of deleting the IoT device from a device list of the user, thereby canceling hijacking of the IoT device. In this process, if the user of the second terminal does not agree to disconnect the connection or does not perform the foregoing user operation, the IoT device is still in a state of being hijacked by the second terminal. Currently, whether the first terminal can successfully cancel the authorization of the control permission of the IoT device depends on the second terminal. Currently, there is no method that can enable the first terminal to actively "recapture" the control permission of the IoT device.

For ease of understanding, the following describes two specific scenarios.

Scenario 1: An intelligent door lock is hijacked by a tenant.

The first terminal is a mobile phone of a landlord, the second terminal is a mobile phone of a tenant, and the IoT device is an intelligent door lock of a rental house. In this case, during residence of the tenant in the rental house, the landlord may authorize a control permission of the intelligent door lock to the tenant by using the mobile phone, so that the tenant can control opening and closing of the intelligent door lock by using the mobile phone, to enter and exit the rental house. However, after the residence of the tenant expires, because the landlord cannot cancel the authorization of the control permission of the intelligent door lock to the tenant by using the mobile phone, the tenant can still control the opening and closing of the intelligent door lock by using the mobile phone, and can still freely enter and exit the rental house. This causes inconvenience to landlord's life, and even brings a security risk.

Scenario 2: A headset is hijacked by another user.

The first terminal is a mobile phone of a user 1, the second terminal is a mobile phone of a user 2, and the IoT device is a headset of the user 1. In this case, if the user 2 wants to use the headset, the user 1 may authorize a control permission of the headset to the user 2 by using the mobile phone, so that the user 2 can use the headset. However, when the user 1 wants to use the headset, if the mobile phone of the user 2 is still connected to the headset of the user 1, the headset of the user 1 can be controlled only by the mobile phone of the user 2. In this case, the user 1 cannot cancel the authorization of the control permission to the user 2 by using the mobile phone, and consequently the user 2 can still continue to use the headset. This causes inconvenience to the user 1.

In view of this, embodiments of this application provide a device control method, a system, an electronic device, and an apparatus, so that the first terminal in the foregoing scenario can actively "recapture" the control permission of the IoT device, thereby effectively avoiding hijacking of the IoT device.

The following describes technical solutions of this application with reference to accompanying drawings.

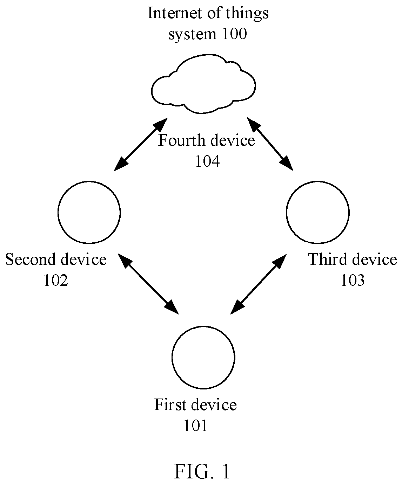

FIG. 1 is a schematic diagram of an architecture of an internet of things system 100 according to an embodiment of this application. The device control method provided in embodiments of this application may be applied to the internet of things system 100 shown in FIG. 1. As shown in FIG. 1, the internet of things system 100 may include one or more electronic devices, for example, a first device 101, a second device 102, a third device 103, and a fourth device 104.

The first device 101, the second device 102, and the third device 103 each may be a terminal device. The terminal device may be specifically a mobile phone, a tablet computer, a television (which may also be referred to as a smart screen or a large-screen device), a notebook computer, an ultra-mobile personal computer (ultra-mobile personal computer, UMPC), a handheld computer, a netbook, a personal digital assistant (personal digital assistant, PDA), a wearable electronic device, a vehicle-mounted device (which may also be referred to as an in-vehicle infotainment), an augmented reality (augmented reality, AR) device, a virtual reality (virtual reality, VR) device, or the like. Alternatively, the terminal device may be an IoT device, for example, a headset, a television, a sound box, a door lock, a refrigerator, an oven, a microwave oven, an air conditioner, a sweeping robot, a smart light, or a camera. This is not limited herein. The fourth device 104 may be a network device, or a cloud device or a cloud platform (referred to as a cloud platform below), which may be specifically a server (server), for example, a database server (database server) or an application server (application server), or may be a single server or a server cluster. This is not limited herein. In a typical scenario, the first device 101 is an IoT device, the second device 102 and the third device 103 each are a terminal device, and the fourth device 104 is a cloud platform.

Communication between the first device 101 and each of the second device 102 and the third device 103, communication between the second device 102 and the first device 101, communication between the third device 103 and the first device 101, and communication between the fourth device 104 and each of the second device 102 and the third device 103 may be implemented in a wired manner, for example, by using a wired connection established by using a universal serial bus (universal serial bus, USB), or may be implemented in a wireless manner, for example, by using a wireless connection established through cellular communication, Bluetooth low energy (Bluetooth low energy, BLE), wireless fidelity (wireless fidelity, Wi-Fi), near field communication (near field communication, NFC), voice over internet protocol (voice over Internet protocol, VoIP), or a communication protocol that supports a network slice architecture. Optionally, a wired or wireless communication connection may be or may not be established between the first device 101 and the fourth device 104. This is not limited. The device control method provided in embodiments of this application is particularly applicable to a scenario in which a wired or wireless communication connection is not established between the first device 101 and the fourth device 104. Certainly, the device control method provided in embodiments of this application is also applicable to a scenario in which a wired or wireless communication connection is established between the first device 101 and the fourth device 104.

For example, in the internet of things system 100, if the third device 103 wants to control the first device 101, and the first device 101 is currently not bound to another device, or is not controlled by another device, the third device 103 or a first user (that is, the first user corresponding to the third device 103, for example, a user of the third device 103) may be bound to the first device 101, to have a control permission of the first device 101, so as to control the first device 101, for example, control the sound box to play audio, control the television to play video, and control the intelligent door lock to be opened and closed. In addition, because the first device 101 is not bound to another device when the third device 103 is bound to the first device 101, the third device 103 may be used as a device that is first bound to the first device 101, that is, a primary control device of the first device 101. In this way, a control permission of the first device 101 that is owned by the third device 103 may be a primary control permission. To be specific, the third device 103 cannot only control the first device 101, but also authorize the control permission of the first device 101 to another device, so that the another device can also control the first device 101. For example, the third device may authorize the control permission of the first device 101 to the second device 102 or a second user (that is, a user corresponding to the second device 102, for example, a user of the second device 102) by using the cloud platform 104, so that the second device 102 can also be bound to the first device 101, to have the control permission of the first device 101, thereby controlling the first device 101. An account (for example, an account on the cloud platform) of the second device 102 is different from an account (for example, an account on the cloud platform) of the third device 103. In addition, because the first device 101 is bound to the third device 103 when the second device 102 is bound to the first device 101, the second device 102 may be used as a device that is not first bound to the first device 101, that is, a secondary control device of the first device 101. In this way, a control permission of the first device 101 that is owned by the second device 102 may be a secondary control permission. To be specific, the second device 102 can control the first device 101, but cannot authorize the control permission of the first device 101 to another device.

Then, when the second device 102 controls the first device 101, because the first device 101 determines that the second device 102 has the secondary control permission instead of the primary control permission, the first device 101 may periodically initiate a control permission check to the second device 102, for example, indicate the second device 102 to obtain a latest control key. In this case, if the third device 103 does not cancel the authorization, for example, does not cancel the authorization of the control permission of the first device 101 to the second device 102 on the cloud platform 104, the second device 102 can complete the control permission check by using the cloud platform 104, for example, obtain the latest control key from the cloud platform 104, so as to continue to control the second device 102 by using the latest control key. In this case, if the third device 103 cancels the authorization, for example, cancels the authorization of the control permission of the first device 101 to the second device 102 on the cloud platform 104, the second device 102 cannot complete the control permission check by using the cloud platform 104, for example, cannot obtain the latest control key from the cloud platform 104. In this way, the first device 101 disconnects the communication connection to the second device 102 because the second device 102 does not obtain the latest control key, so as to prevent the first device 101 from being hijacked by the second device 102.

It should be noted that the binding of the first device 101 to the third device 103 may be binding to the first user corresponding to the third device 103, for example, establishing a correspondence between an identifier of the first device 101 and an identifier of the first user or an account of the first user. In this way, that the third device 103 has the control permission of the first device 101 may be considered that the first user has the control permission of the first device 101. In this case, if the first user logs in to a same account by using different devices, the first user may still control the first device by using the binding relationship with the first user, without performing re-registration and re-binding, so as to improve user experience. Likewise, the binding of the first device 101 to the second device 102 may be binding to the second user corresponding to the second device 102, for example, establishing a correspondence between an identifier of the first device 101 and an identifier of the second user or an account of the second user. In this way, that the second device 102 has the control permission of the first device 101 may be considered that the second user has the control permission of the first device 101. In this case, if the second user logs in to a same account by using different devices, the second user may still control the first device by using the binding relationship with the second user, and the first user does not need to perform re-authorization, so as to improve user experience. In addition, for the first device 101, a user (for example, the first user) having the primary control permission may be unique, for example, there is only one user, but there may be a plurality of users (for example, the second user) having the secondary control permission, for example, there may be one or more users, so that the user having the primary control permission may manage the control permissions of all the users having the secondary control permission, for example, authorization and authorization cancellation, thereby improving management efficiency.

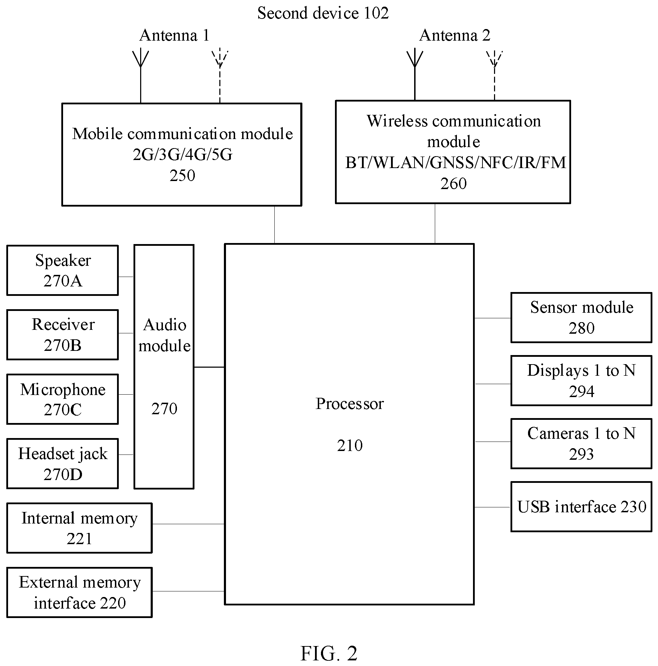

FIG. 2 is a schematic diagram of a structure of a terminal device (for example, a mobile phone) according to an embodiment of this application. As shown in FIG. 2, the second device 102 may include a processor 210, an external memory interface 220, an internal memory 221, a universal serial bus (universal serial bus, USB) interface 230, an antenna 1, an antenna 2, a mobile communication module 250, a wireless communication module 260, an audio module 270, a speaker 270A, a receiver 270B, a microphone 270C, a headset jack 270D, a sensor module 280, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor 210 may directly invoke the instructions or the data from the memory. This avoids repeated access and reduces waiting time of the processor 210, so as to improve system efficiency.

A wireless communication function of the terminal device may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that is applied to the terminal device and that includes 2G/3G/4G/5G and the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same component as at least some modules in the processor 210.

The wireless communication module 260 may provide a wireless communication solution that is applied to the terminal device and that includes a wireless local area network (wireless local area network, WLAN), for example, a Wi-Fi network, BLE, a global navigation satellite system (global navigation satellite system, GNSS), frequency modulation (frequency modulation, FM), NFC, an infrared (infrared, IR) technology, and the like. The wireless communication module 260 may be one or more components integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the terminal device, the antenna 1 is coupled to the mobile communication module 250, and the antenna 2 is coupled to the wireless communication module 260, so that the terminal device can communicate with a network and another device by using a wireless communication technology. The wireless communication technology may include a GSM, a GPRS, CDMA, WCDMA, TD-SCDMA, LTE, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device implements a display function through the GPU, a display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device may include one or N displays 194, where N is a positive integer greater than 1.

The terminal device may implement a photographing function through the ISP, a camera 293, the video codec, the GPU, the display 294, the application processor, and the like.

The ISP is configured to process data fed back by the camera 293. For example, during photographing, a shutter is pressed, light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a still image or a video. An object generates an optical image through the lens and projects the optical image to the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the ISP converts the electrical signal into a digital image signal. The ISP outputs the digital image signal to the DSP for processing. The DSP converts the digital image signal into an image signal in a standard format like RGB or YUV. In some embodiments, the terminal device may include one or N cameras 293, where N is a positive integer greater than 1.

The digital signal processor is configured to process a digital signal, and may process another digital signal in addition to the digital image signal. For example, when the terminal device selects a frequency, the digital signal processor is configured to perform Fourier transform on frequency energy.

The video codec is configured to compress or decompress a digital video. The terminal device may support one or more video codecs. In this way, the terminal device may play or record videos in a plurality of coding formats, for example, moving picture experts group (moving picture experts group, MPEG)-1, MPEG-2, MPEG-3, and MPEG-4.

The external memory interface 220 may be configured to connect to an external storage card, for example, a microSD card, to extend a storage capability of the terminal device. The external storage card communicates with the processor 210 through the external memory interface 220, to implement a data storage function. For example, files such as music and a video are stored in the external storage card.

The internal memory 221 may be configured to store computer-executable program code, and the executable program code includes instructions. The processor 210 runs the instructions stored in the internal memory 221, to implement various function applications and data processing of the terminal device. The internal memory 221 may include a program storage area and a data storage area. The program storage area may store an operating system, an application required by at least one function (for example, a sound playing function or an image playing function), and the like. The data storage area may store data (for example, audio data or a phone book) and the like created in a process of using the terminal device. In addition, the internal memory 221 may include a highspeed random access memory, or may include a nonvolatile memory, for example, at least one disk storage device, a flash memory, or a universal flash storage (universal flash storage, UFS).

The terminal device may implement an audio function like music play or recording through the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some function modules in the audio module 270 may be disposed in the processor 210.

The speaker 270A, also referred to as a "loudspeaker", is configured to convert an audio electrical signal into a sound signal. The terminal device may be used to listen to music or answer a call in a hands-free mode through the speaker 270A.

The receiver 270B, also referred to as an "earpiece", is configured to convert an audio electrical signal into a sound signal. When the terminal device is used to answer a call or listen to voice information, the receiver 270B may be put close to a human ear to listen to a voice.

The microphone 270C, also referred to as a "mike" or a "mic", is configured to convert a sound signal into an electrical signal. When making a call or sending a voice message, a user may make a sound near the microphone 270C through the mouth of the user, to input a sound signal to the microphone 270C. At least one microphone 270C may be disposed in the terminal device. In some other embodiments, two microphones 270C may be disposed in the terminal device, to collect a sound signal and further implement a noise reduction function. In some other embodiments, three, four, or more microphones 270C may alternatively be disposed in the terminal device, to collect a sound signal, implement noise reduction, identify a sound source, implement a directional recording function, and the like.

The headset jack 270D is configured to connect to a wired headset. The headset jack 270D may be the USB interface 230, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 280 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Certainly, the terminal device may further include a charging management module, a power management module, a battery, a button, an indicator, one or more SIM card interfaces, and the like. This is not limited in embodiments of this application.

It may be understood that the structure shown in embodiments of the present invention does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by hardware, software, or a combination of software and hardware. In addition, a device connection described in embodiments of this application may be a direct connection, or may be an indirect connection, for example, a connection forwarded by another device. This is not limited herein. Sending described in embodiments of this application may be direct sending, or may be indirect sending, for example, sending forwarded by another device. This is not limited herein.

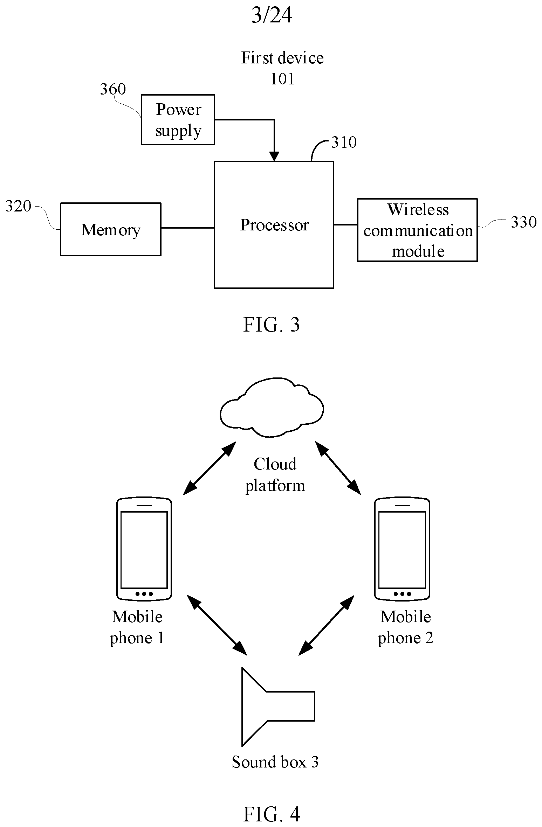

FIG. 3 is a schematic diagram of a structure of an IoT device (for example, a sound box) according to an embodiment of this application. As shown in FIG. 3, the IoT device may include a processor 310, a memory 320, a wireless communication module 330, and a power supply 340.

The memory 320 may be configured to store application code, for example, application code used for pairing and connection between the IoT device and the foregoing mobile phone. The processor 310 may control execution of the foregoing application code, so as to implement a function of checking a control permission in embodiments of this application.

The memory 320 may further store an address used to uniquely identify the IoT device. In addition, the memory 320 may further store connection data of a device that is successfully paired with the IoT device previously. For example, the connection data may be an address of the device that is successfully paired with the IoT device. Based on the connection data, the IoT device can be automatically paired with the device, and a connection between the IoT device and the device does not need to be configured, for example, validity verification is performed. The address may be a media access control (media access control, MAC) address.

The wireless communication module 330 is configured to support short-distance data exchange between the IoT device and various devices, for example, the foregoing mobile phone. In some embodiments, the wireless communication module 340 may be a transceiver. The IoT device may establish a wireless connection, like a Bluetooth connection, a Wi-Fi connection, or an NFC connection, to the mobile phone by using the transceiver, to implement short-distance data exchange between the IoT device and the mobile phone.

The power supply 340 may be configured to supply power to components included in the IoT device. In some embodiments, the power supply 340 may be a battery, for example, a rechargeable battery.

It may be understood that the structure shown in embodiments of this application does not constitute a specific limitation on the IoT device. If the IoT device is a device of a different type, the IoT device may have more or fewer components than those shown in FIG. 3, two or more components may be combined, or different component configurations may be used. For example, if the IoT device is a sound box, the IoT device may further include a speaker and a microphone; if the IoT device is a television, the IoT device may further include a display and a speaker; or if the IoT device is an air conditioner, the IoT device may further include a compressor and a condensation pipe. This is not limited herein. In addition, various components shown in FIG. 3 may be implemented in hardware including one or more signal processing circuits or application-specific integrated circuits, in software, or in a combination of hardware and software.

FIG. 4 is a schematic diagram of an application scenario of a device control method according to an embodiment of this application.

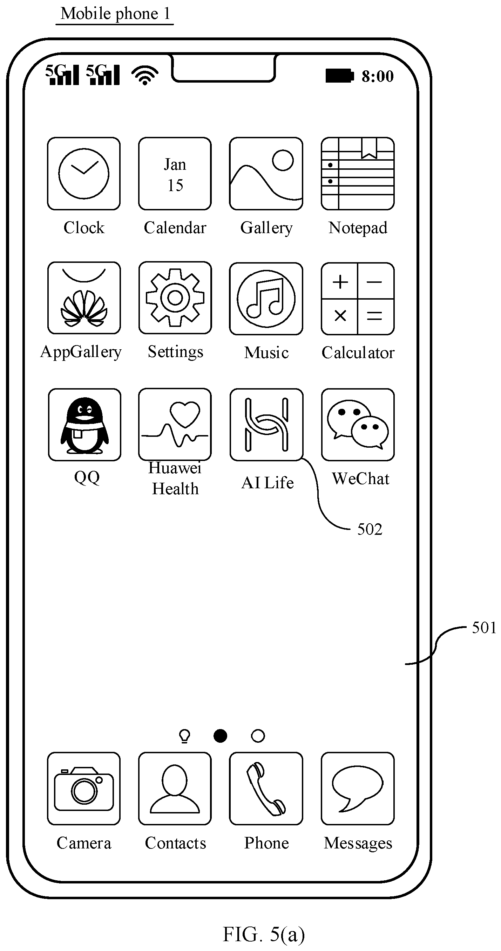

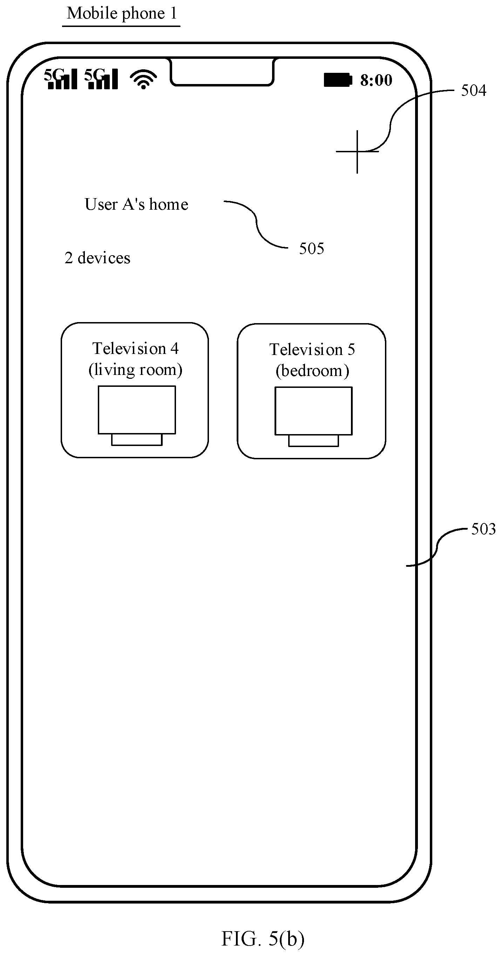

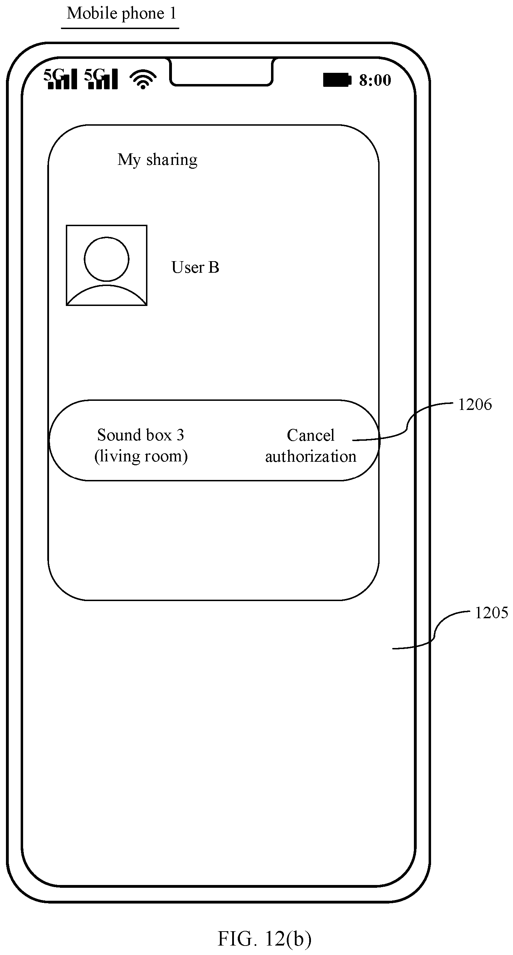

FIG. 5(a) and FIG. 5(b) to FIG. 12(a) and FIG. 12(b) are diagrams of interaction interfaces according to embodiments of this application.

The following specifically describes the device control method provided in embodiments of this application by using an example in which the third device is a mobile phone 1, the second device is a mobile phone 2, and the first device is a sound box 3.

For example, it is assumed that a user corresponding to the mobile phone 1 or a user of the mobile phone 1 is referred to as a "user A", and a user corresponding to the mobile phone 2 or a user of the mobile phone 2 is referred to as a "user B". In this case, if the sound box 3 is a new device, for example, a device that is not controlled by the user A previously, the user A needs to be first bound to the sound box 3 by using the mobile phone 1, for example, establish a correspondence between an identifier (identity document, ID) like an account identifier of the user A and an identifier of the sound box 3, so as to obtain a control permission of the sound box 3. The account identifier of the user A may be an identifier allocated by a cloud platform to a registered account of the user A after the user A registers with the cloud platform. The identifier of the sound box 3 may be an identifier allocated by the cloud platform to the sound box 3 when the sound box 3 registers with the cloud platform. In this way, when the user A is bound to the sound box 3, the user A may authorize the control permission of the sound box 3 to the user B by using the mobile phone 1, so that the user B can also control the sound box 3 by using the mobile phone 2. This is specifically described below.

In embodiments of this application, as shown in FIG. 5(a), the mobile phone 1 may display a home screen 501. The home screen 501 may be an interface displayed after the mobile phone 1 is powered on, but this is not limited. Alternatively, the home screen 501 may be another interface, for example, a background interface like a leftmost screen. The home screen 501 may include various applications (application, APP) installed on the mobile phone 1. For example, the home screen 501 may include icons of built-in APPs of the mobile phone 1, such as Clock, Calendar, Gallery, Notepad, AppGallery, Settings, Music Player, Calculator, Huawei Health, Camera, Phone, Messages, Contacts, and AI Life 502. For another example, the home screen 501 may include third-party APPs, such as WeChat, QQ, Alipay, and Games.

If the user A wants to be bound to a device, the user A may tap AI Life 502 on the home screen 501. In response to the operation, the mobile phone 1 may jump from the home screen 501 to an APP interface 503 of AI Life 502 (as shown in FIG. 5(b)). In the APP interface 503, "2 devices" may indicate that the user A is bound to two devices, for example, a television 4 and a television 5, and icons of the television 4 and the television 5 may be displayed near, for example, below, "2 devices", so that the user A knows specific types of the bound devices. Both "+" 504 and "user A's home" 505 may be used to bind to a new device, and authorize a control permission of the bound device to another device. However, a difference lies in that "+" 504 implements the foregoing functions by device, and "user A's home" 505 implements the foregoing functions by group. The following separately provides descriptions.

### A. Bind a device to a new device:

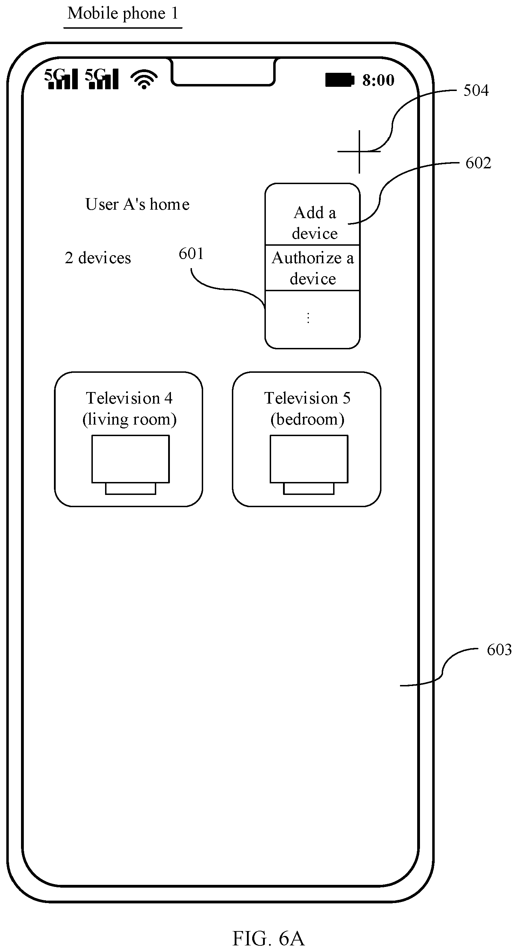

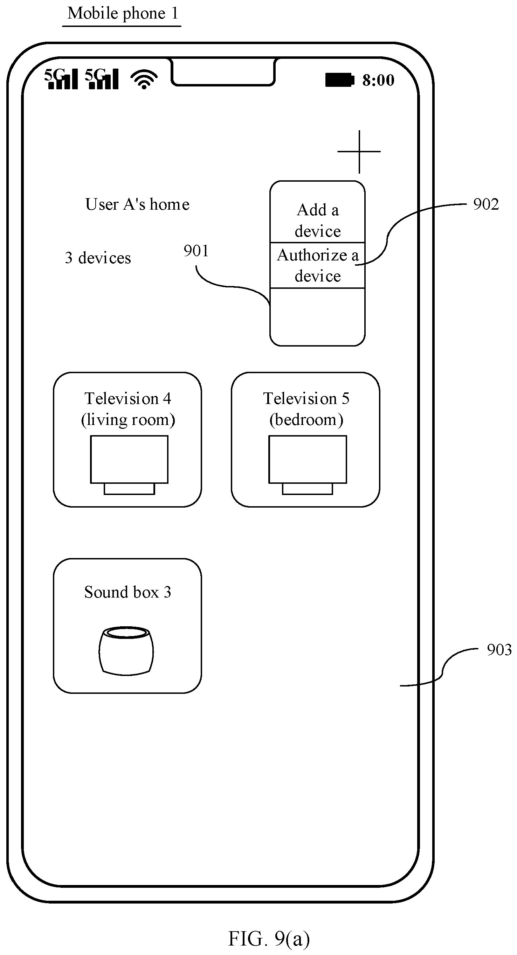

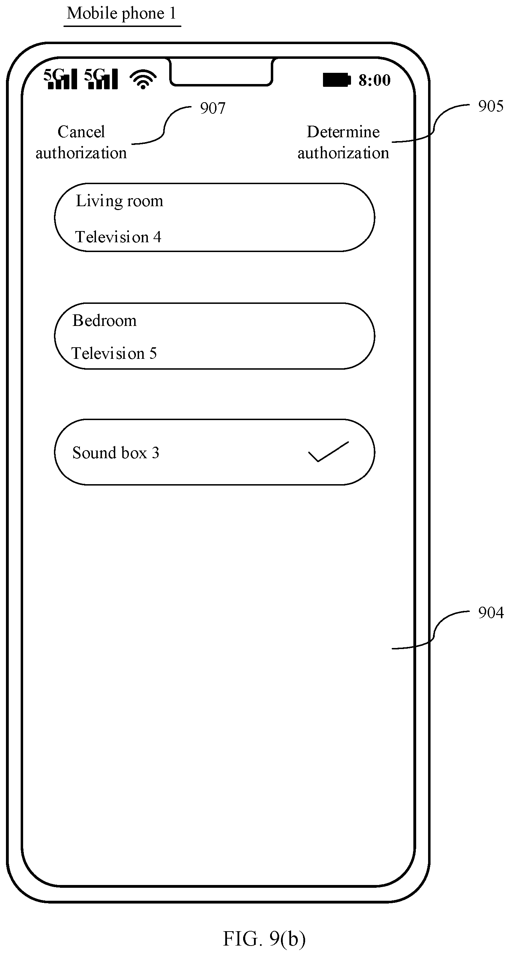

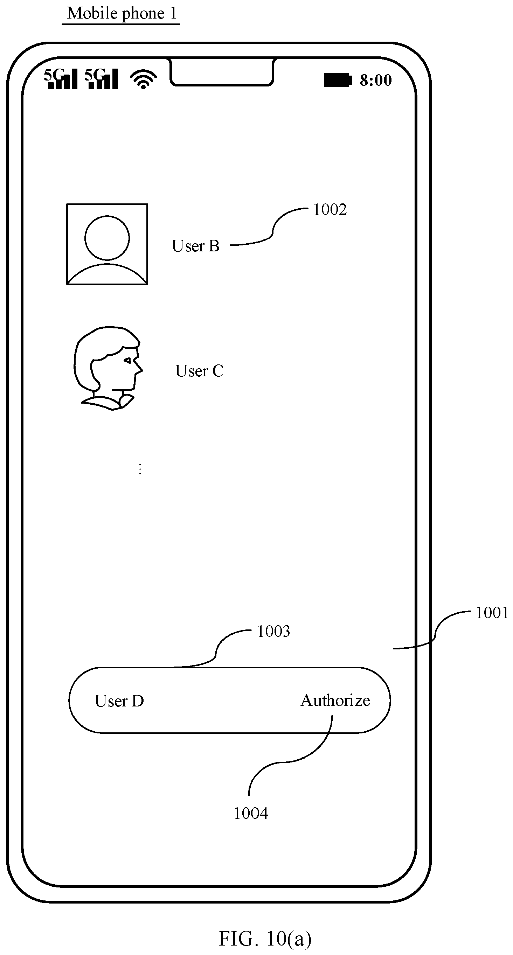

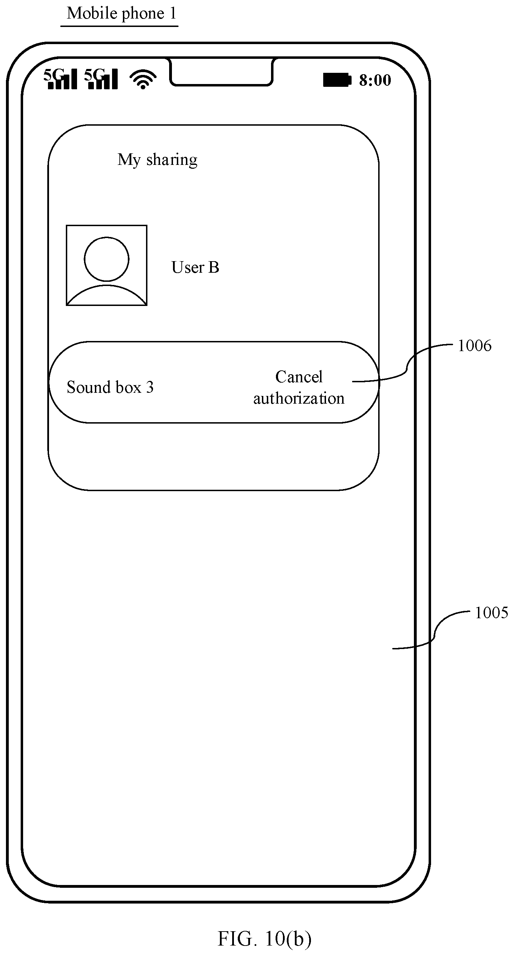

Refer to FIG. 5(b). If the user A wants to add and bind to a device separately, the user A may tap "+" 504. In response to the operation, the mobile phone 1 may display a second-level menu 601 near "+" 504 (as shown in FIG. 6A). The second-level menu 601 may include "add a device" 602, "authorize a device", and the like. "Add a device" 602 may be used to bind to a new device, and "authorize a device" may be used to authorize a control permission of a bound device to another user (for specific implementation, refer to related descriptions in FIG. 9(a) and FIG. 9(b) and FIG. 10(a) and FIG. 10(b) below).

It should be understood that the second-level menu 601 is merely an example implementation, and does not constitute a limitation. For example, in response to an operation of tapping "+" 504, the mobile phone 1 may jump from the APP interface 503 to a new interface, for example, a device adding/authorization interface, and the device adding/authorization interface also includes "add a device" 602, "authorize a device", and the like, so as to implement the foregoing functions of binding to a device and authorizing a control permission.

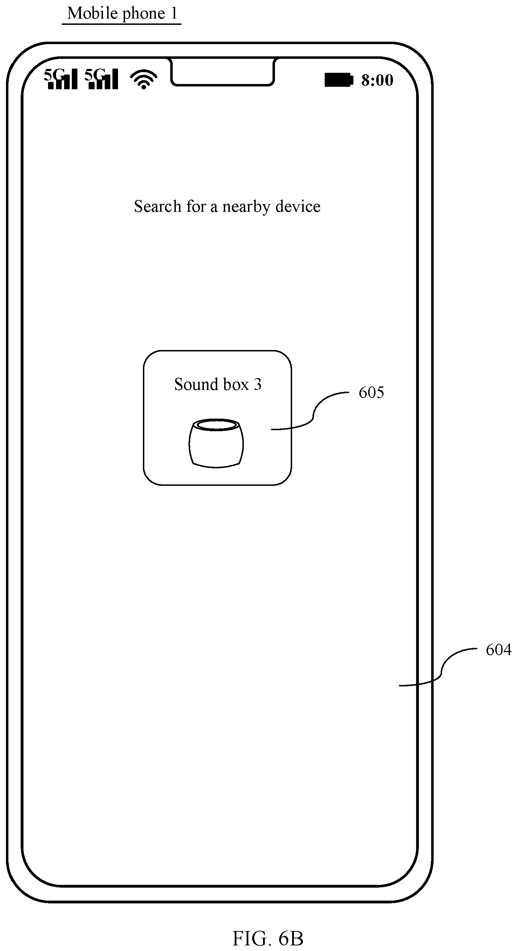

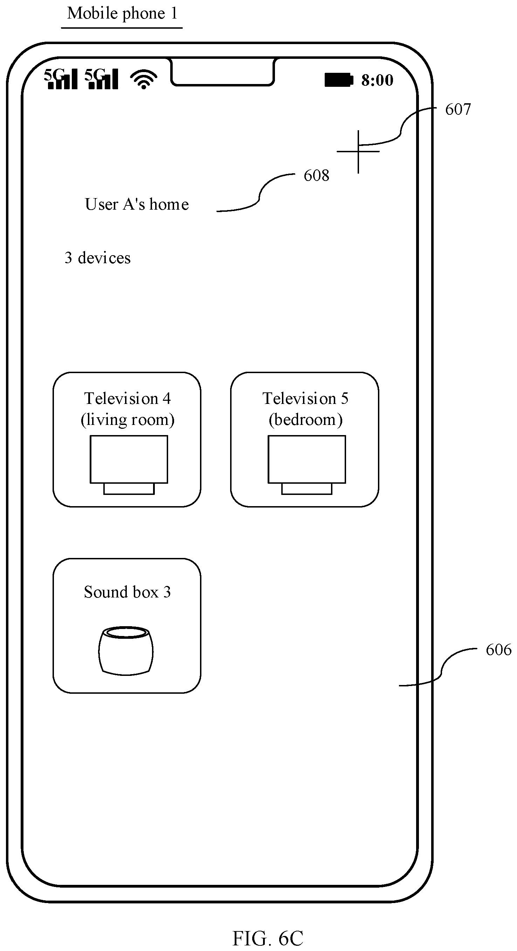

Further, if the user A taps "add a device" 602, in response to the operation, the mobile phone 1 may jump from an APP interface 603 to a device search interface 604 (as shown in FIG. 6B), and the mobile phone 1 may search for a nearby device, for example, find the sound box 3, so as to display an icon 605 of the sound box 3 on the device search interface 604. In this way, if the user A taps the icon 605, in response to the operation, the mobile phone 1 may establish a binding relationship between the user A and the sound box 3, for example, establish a correspondence between the identifier of the user A and the identifier of the sound box 3, and the mobile phone 1 may jump back to an APP interface 606 from the device search interface 604 (as shown in FIG. 6C). It should be understood that, because the user A is bound to the sound box 3, an icon in the APP interface 606 may be changed from "2 devices" to "3 devices", to indicate that the user A is bound to three devices, for example, the sound box 3, the television 4, and the television 5, and the icon of the sound box 3 may be newly displayed near, for example, below, "3 devices", so that the user A knows a specific type of the newly bound device.

### B. Bind a group to a new device:

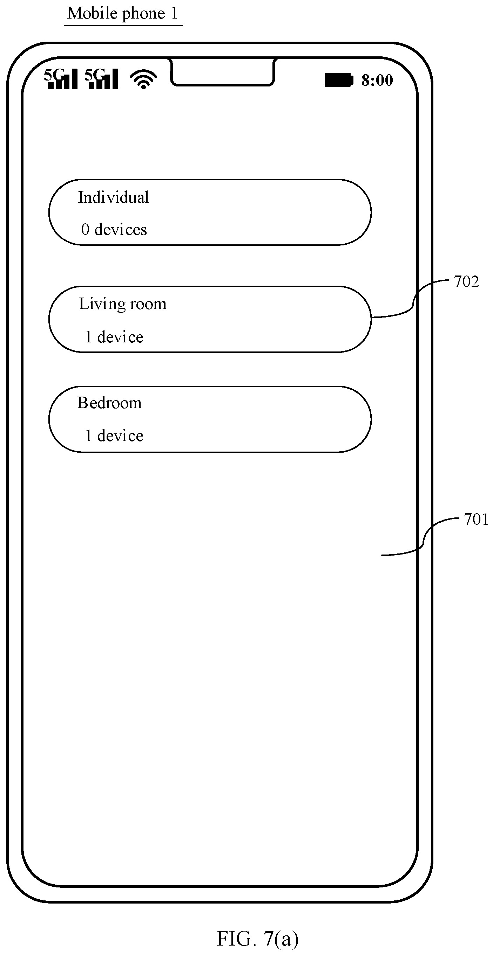

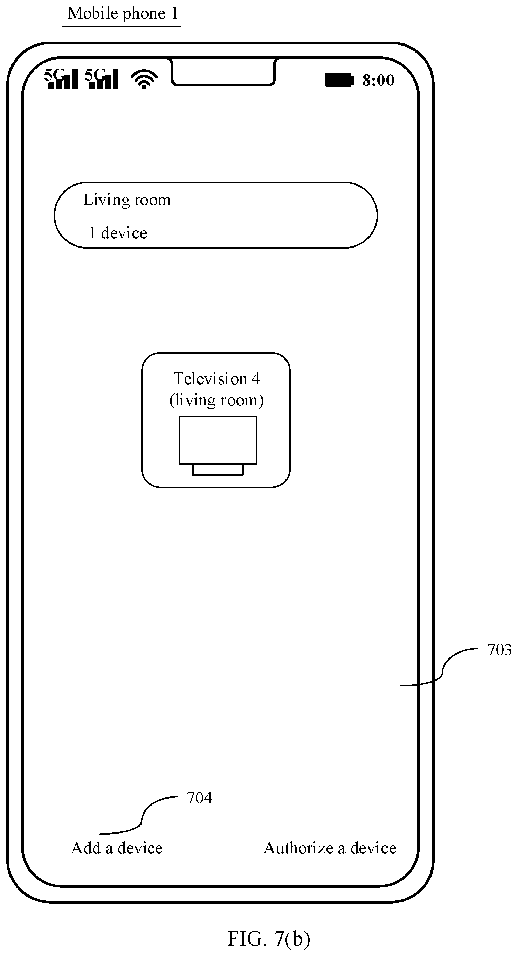

Refer to FIG. 5(b). If the user A wants to add and bind to a device in a group, the user A may tap "user A's home" 505. In response to the operation, the mobile phone 1 may jump from the APP interface 503 to a group management interface 701 (as shown in FIG. 7(a)). The group management interface 701 may include icons of various groups, for example, "individual", "living room" 702, and "bedroom". In addition, a quantity of devices in each group may be further displayed in the icon of each group. For example, "individual" includes 0 devices, "living room" 702 includes 1 device, and "bedroom" includes 1 device, so as to facilitate user management. "Living room" 702 is used as an example. If the user A wants to bind to a new device in "living room" 702, the user A may tap "living room" 702. In response to the operation, the mobile phone 1 may jump from the group management interface 701 to a living room management interface 703 shown in FIG. 7(b). The living room management interface 703 may include an icon of a device in "living room" 702, for example, the television 4, and may further include "add a device" 704 and "authorize a device". "Add a device" 602 may be used to bind to a new device in "living room" 702, and "authorize a device" may be used to authorize a control permission of a bound device, for example, the television 4, in "living room" 702 to another user (for specific implementation, refer to related descriptions in FIG. 9(a) and FIG. 9(b) and FIG. 10(a) and FIG. 10(b) below).

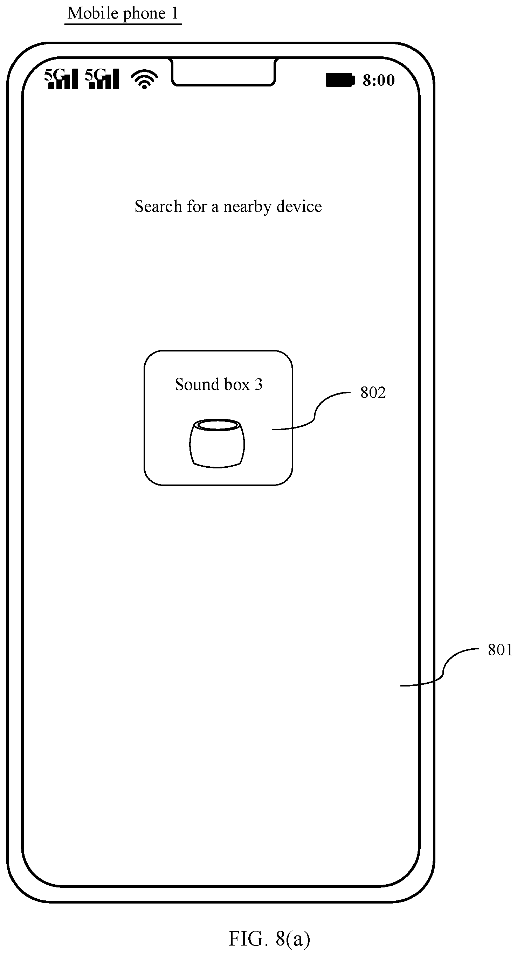

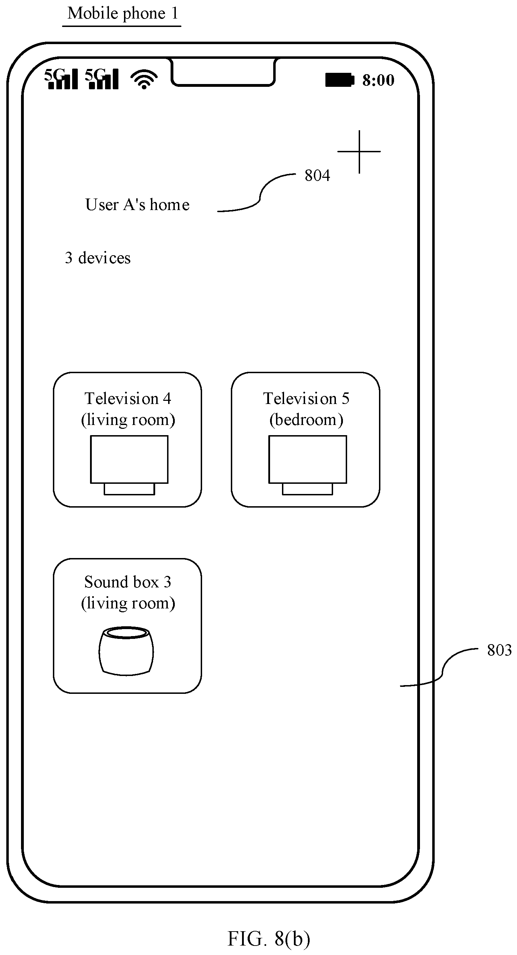

Further, if the user A taps "add a device" 704, in response to the operation, the mobile phone 1 may jump from the living room management interface 703 to a device search interface 801 (as shown in FIG. 8(a)), and the mobile phone 1 may search for a nearby device, for example, find the sound box 3, so as to display an icon 802 of the sound box 3 on the device search interface 801. In this way, if the user A taps the icon 802, in response to the operation, the mobile phone 1 may establish a binding relationship between the user A and the sound box 3, for example, establish a correspondence between the identifier of the user A and the identifier of the sound box 3, and the mobile phone 1 may jump back to an APP interface 803 from the device search interface 801 (as shown in FIG. 8(b)). It should be understood that, because the user A is bound to the sound box 3, an icon in the APP interface 803 may be changed from "2 devices" to "3 devices", to indicate that the user A is bound to three devices, for example, the sound box 3 and the television 4 in "living room", and the television 5 in "bedroom", and the icon of the sound box 3 may be newly displayed near, for example, below, "3 devices", so that the user A knows a specific type of the newly bound device.

It should be noted that the sound box 3 is used as an example, and it can be learned from FIG. 6C and FIG. 8(b) that, if the sound box 3 is bound to a device, the bound sound box 3 is an independent bound device and does not belong to a group; or if the sound box 3 is bound to a group, the bound sound box 3 may belong to a corresponding group, for example, belong to "living room". In other words, the user may select a corresponding binding method according to an actual requirement. For example, if the user wants to independently control a device, the user may use the foregoing binding method of binding by device; or if the user wants to control a group, for example, in group sharing or group playing, the user may use the foregoing binding method of binding by group.

Further, the sound box 3 is still used as an example, and the cloud platform may determine, based on the binding relationship between the user A and the sound box 3, that the user A has a primary control permission of the sound box 3, so as to allocate a control key, for example, a key 1, of the sound box 3 to the mobile phone 1. In this way, the mobile phone 1 may send the key 1 and the binding relationship between the user A and the sound box 3 to the sound box 3. Correspondingly, the sound box 3 may determine, based on the binding relationship between the user A and the sound box 3, that the user A has the control permission of the sound box 3. In this way, the sound box 3 and the mobile phone 1 may establish a session by using the key 1, to perform encrypted communication by using the session, so as to implement encryption control, ensure control security, and avoid theft of the control permission. It should be understood that the cloud platform may correspondingly allocate different control keys to different devices of a same user, so that a control key used by each device and a control key used by another device are different, and do not interfere with each other, thereby further improving security of encrypted communication. For example, the cloud platform allocates the key 1 to the mobile phone 1 of the user A, and allocates a key X to another device of the user A, for example, a mobile phone 3 (not shown in FIG. 4), where the key 1 is different from the key X. In this way, the mobile phone 1 and the sound box 3 may establish the session by using the key 1, and the mobile phone 3 and the sound box 3 may establish a session by using the key X.

Further, after the user A is bound to the sound box 3, the control permission of the bound device, for example, the sound box 3, may be authorized to another user, for example, the user B. It can be learned from the related descriptions in FIG. 5(a) and FIG. 5(b) that the user A may authorize a control permission by device or by group. The following separately provides descriptions.

### 1. Authorize a control permission by device:

Refer to FIG. 6C. If the user A wants to authorize a control permission of a device to another user, the user A may tap "+" 607. In response to the operation, the mobile phone 1 may display a second-level menu 901 near "+" 607 (as shown in FIG. 9(a)). Then, the user A may tap "authorize a device" 902, and in response to the operation, the mobile phone 1 may jump from an APP interface 903 to a device authorization interface 904 (as shown in FIG. 9(b)). The device authorization interface 904 may include icons of all bound devices of the user A, for example, the television 4 in "living room", the television 5 in "bedroom", and the sound box 3 that is not grouped. Further, the user A may select a corresponding device on the device authorization interface 904, for example, select the corresponding device through touching and holding or tapping. A selection mark may be displayed near the selected device, so that the user A can deselect the selected device, thereby modifying an incorrectly selected device. Alternatively, an icon of the selected device may be displayed in a manner of highlight, jitter, or the like for distinguishing. The user A may select a device, for example, select the sound box 3, or may select a plurality of devices, for example, select the sound box 3, the television 4, and the television 5. For example, the sound box 3 is selected. The user A may tap "determine authorization" 905. In response to the operation, the mobile phone 1 may jump from the device authorization interface 904 to a user selection interface 1001 (as shown in FIG. 10(a)). In addition, if the user A wants to cancel authorization, the user A may tap "cancel authorization" 907. In response to the operation, the mobile phone 1 may return from the device authorization interface 904 to the APP interface 903.

Further, the user selection interface 1001 may include an icon of a user who has been authorized, for example, an icon 1002 of the user B, an icon of a user C, and the like. In this way, if the user A wants to authorize the control permission of the sound box 3 to the user B, the user A may directly tap the icon 1002 of the user B, so as to more conveniently authorize the control permission, for example, the control permission of the sound box 3, to a user who has been authorized, for example, the user B. In addition, icons of users who have been authorized may be sorted according to authorization frequencies, for example, sorted from top to bottom in descending order of authorization frequencies, so that the user A can more conveniently select a user who is frequently authorized, which further improves user experience. For example, if a frequency of authorizing the user B by the user A is higher than a frequency of authorizing the user C by the user A, the icon 1002 of the user B and the icon of the user C are sequentially arranged from top to bottom. In addition, the user selection interface 1001 may further include a user input box 1003, so that the user A can authorize the control permission to an unauthorized user. For example, if the user A wants to authorize the control permission of the sound box 3 to an unauthorized user, for example, a user D, the user A may input an account of the user D in the user input box 1003, and then tap "authorize" 1004, so as to authorize the control permission of the sound box 3 to the user D.

It should be understood that the foregoing authorization manner is merely an example, and does not constitute a limitation. For example, after the user A taps "determine authorization" 905, in response to the operation, the mobile phone 1 may directly authorize the control permission of the sound box 3 to a user corresponding to a mobile phone currently connected to the mobile phone 1. For example, if the mobile phone 1 is currently connected to the mobile phone of the user B through Bluetooth, NFC, or Wi-Fi, the mobile phone 1 may directly authorize the control permission of the sound box 3 to the user B.

Optionally, if the authorization succeeds, the mobile phone 1 may display, on a current interface, for example, the user selection interface 1001, prompt information indicating that the authorization succeeds, for example, the sound box 3 has been authorized to the user B, so that the user can know in time that the control permission is successfully authorized, thereby providing a decision basis for the user to subsequently cancel the authorization. In addition, the mobile phone 1 may further jump from the user selection interface 1001 to an authorization management interface 1005 (as shown in FIG. 10(b)). The authorization management interface 1005 may include the icon of the user B, a device whose control permission is authorized, for example, the icon of the sound box 3, and "cancel authorization" 1006. Certainly, if the authorization fails, the mobile phone 1 may display, on the current interface, for example, the user selection interface 1001, prompt information indicating that the authorization fails, for example, the sound box 3 fails to be authorized, so that the user can know the information in time and perform re-authorization.

### 2. Authorize a control permission by group:

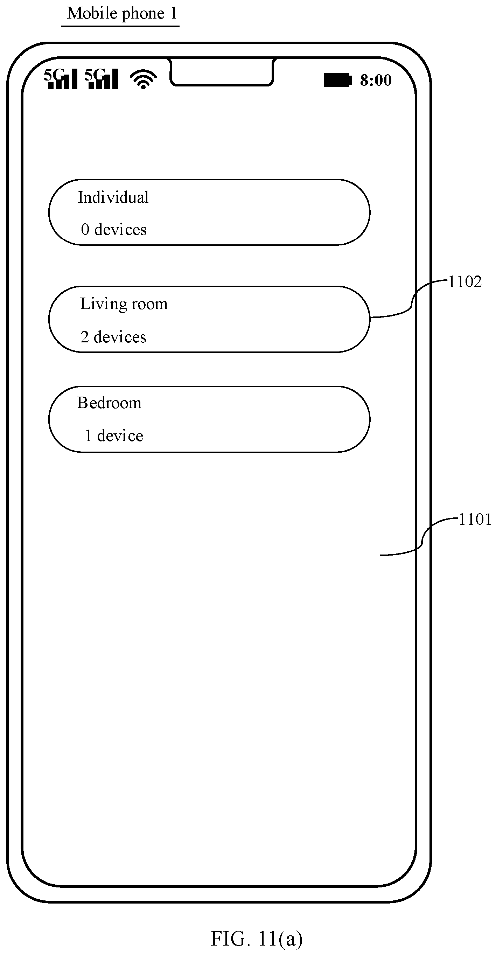

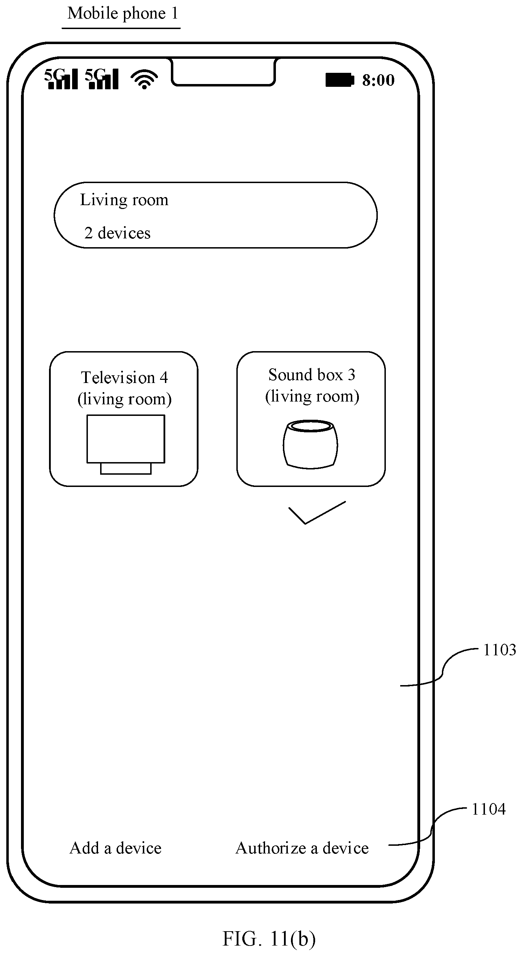

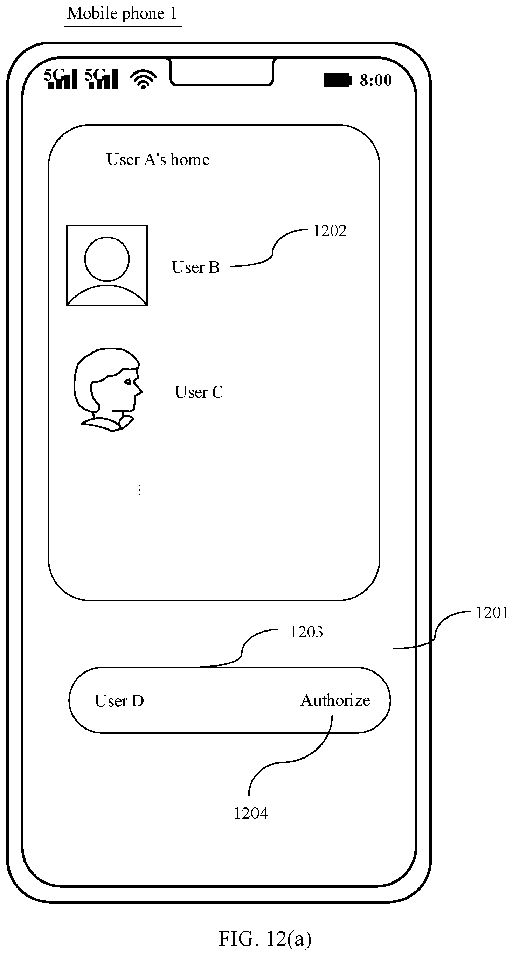

Refer to FIG. 8(b). If the user A wants to authorize control permissions of one or more devices in a group to another user, the user A may tap "user A's home" 804. In response to the operation, the mobile phone 1 may jump from the APP interface 803 to a group management interface 1101 (as shown in FIG. 11(a)), so that the user A can authorize control permissions of one or more devices in each group, for example, a control permission of the sound box 3 and/or a control permission of the television 4 in "living room" 1102, and/or a control permission of the television 5 in "bedroom", to another user. "Living room" 1102 is used as an example. If the user A wants to authorize the control permission of the sound box 3 and/or the control permission of the television 4 in "living room" 1102 to another user, the user A may tap "living room" 1102. In response to the operation, the mobile phone 1 may jump from the group management interface 1101 to a living room management interface 1103 (as shown in FIG. 11(b)). Further, the user A may select an icon of a corresponding device on the living room management interface 1103, for example, select the corresponding device by touching and holding the icon. A selection mark may be displayed near the selected device, so that the user A can deselect the selected device, thereby modifying an incorrectly selected device. Alternatively, an icon of the selected device may be displayed in a manner of highlight, jitter, or the like for distinguishing. The user A may select a device, for example, select the sound box 3, or may select a plurality of devices, for example, select the sound box 3 and the television 4. For example, the sound box 3 is selected. The user A may tap "authorize a device" 1104. In response to the operation, the mobile phone 1 may jump from the living room management interface 1103 to a user selection interface 1201 (as shown in FIG. 12(a)).

Further, the user selection interface 1201 may include icons of all users in a user group corresponding to "user A's home", for example, an icon 1202 of the user B and an icon of the user C. In this way, if the user A wants to authorize the control permission of the sound box 3 to the user B, the user A may directly tap the icon 1202 of the user B, so as to conveniently authorize the control permission, for example, the control permission of the sound box 3, to a user in the user group, for example, the user B. In addition, the icons of all the users in the user group may be sorted according to authorization frequencies, for example, sorted from top to bottom in descending order of authorization frequencies, so that the user A can more conveniently authorize the control permission to a user who is frequently authorized in the user group, which further improves user experience. In addition, the user selection interface 1201 may further include a user input box 1203, so that the user A can authorize the control permission to a user who is not in the user group. For example, if a user D is a user who is not in the user group, the user A may input an account of the user D in the user input box 1203, and then tap "authorize" 1204, so as to authorize the control permission of the sound box 3 to the user D.

It should be understood that the foregoing authorization manner is merely an example, and does not constitute a limitation. For example, as shown in FIG. 11(a) and FIG. 11(b), in the group management interface 1101, the user A may directly select a group, for example, touch and hold to select "living room" 1102. In response to the touch and hold operation, the mobile phone 1 may determine that all devices in the selected group, for example, the television 4 and the sound box 3, need to be authorized with a control permission, so that the mobile phone 1 can directly jump from the group management interface 1101 to the user selection interface 1201, thereby reducing a quantity of interface jumps, and improving user experience. For another example, after the user A taps "authorize a device" 1104, in response to the operation, the mobile phone 1 may directly authorize the control permission of the sound box 3 to a user that is in the user group and that is currently connected to the mobile phone 1, so as to reduce user operations and improve user experience. For example, if users in the user group include the user B and the user C, and the mobile phone 1 is currently connected to the mobile phone of the user B through Bluetooth, NFC, or Wi-Fi, the mobile phone 1 may directly authorize the control permission of the sound box 3 to the user B.

Optionally, if the authorization succeeds, the mobile phone 1 may display, on a current interface, for example, the user selection interface 1201, prompt information indicating that the authorization succeeds, for example, the sound box 3 has been authorized to the user B, so that the user can know in time that the control permission is successfully authorized, thereby providing a decision basis for the user to subsequently cancel the authorization. In addition, the mobile phone 1 may further jump from the user selection interface 1201 to an authorization management interface 1205 (as shown in FIG. 12(b)). The authorization management interface 1205 may include the icon of the user B, a device whose control permission is authorized, for example, the icon of the sound box 3 (living room), and "cancel authorization" 1206. Certainly, if the authorization fails, the mobile phone 1 may display, on the current interface, for example, the user selection interface 1201, prompt information indicating that the authorization fails, for example, the sound box 3 fails to be authorized, so that the user can know the information in time and perform re-authorization.

Further, still using authorization to the user B as an example, the mobile phone 1 may send an identifier of the user B and the identifier of the sound box 3 to the cloud platform. Because the cloud platform has determined that the user A has the primary control permission of the sound box 3, the cloud platform may determine, based on the identifier of the user B and the identifier of the sound box 3, that the user B has a secondary control permission of the sound box 3, to send the identifier of the sound box 3 to the mobile phone 2. In this way, the mobile phone 2 may send the identifier of the sound box 3 and the identifier of the user B to the sound box 3, so as to initiate control of the sound box 3. Correspondingly, because the sound box 3 locally records the binding relationship between the user A and the sound box 3, the sound box 3 may determine, based on the identifier of the user B and the identifier of the sound box 3, that a user initiating the control is not the user A, to determine that the user B has the secondary control permission of the sound box 3. In this way, the sound box 3 may periodically initiate a control permission check to the user B, so as to prevent the sound box 3 from being hijacked by the user B. For example, for a periodicity, the sound box 3 may randomly generate a check value, for example, a check value 1. Then, the sound box 3 may determine a latest control key, for example, a key 3, based on the check value 1, the key 1, and the identifier of the user B. In addition, the sound box 3 may notify the mobile phone 2 to obtain the latest control key, for example, send the check value 1 to the mobile phone 2, so that the mobile phone 2 forwards the check value 1 to the cloud platform. In this way, if the user A does not cancel the authorization of the control permission of the user B on the cloud platform, after receiving the check value 1, the cloud platform still determines that the user B has the secondary control permission of the sound box 3, to determine the latest control key, that is, the key 3, based on the check value 1, the key 1, and the identifier of the user B, and send the key 3 to the mobile phone 2, so that the mobile phone 2 can obtain a same key as the sound box 3, and continue to establish a session with the sound box 3 by using the key 3, thereby continuing to control the sound box 3. On the contrary, with reference to FIG. 10(b) or FIG. 12(b), if the user A wants to cancel the authorization, the user A may tap "cancel authorization" 1006 or "cancel authorization" 1206. In response to the operation, the mobile phone 1 may cancel the authorization of the control permission of the user B on the cloud platform, so that the cloud platform no longer determines the key 3 based on the check value 1, the key 1, and the identifier of the user B. In this way, the mobile phone 2 cannot obtain a same control key as the sound box 3, and cannot continue to control the sound box 3, so as to prevent the mobile phone 2 from hijacking the sound box 3.

With reference to FIG. 4 to FIG. 12(a) and FIG. 12(b), the foregoing describes the application scenario and the interaction interface of the device control method provided in embodiments of this application. For ease of understanding, the following specifically describes an implementation principle of the device control method.

For example, still using an example in which the third device is a mobile phone 1, the second device is a mobile phone 2, and the first device is a sound box 3, an overall procedure of the device control method provided in embodiments of this application may include: The mobile phone 1 registers the sound box 3 with a cloud platform, so that the cloud platform can bind the sound box 3 to the mobile phone 1 (or bind the sound box 3 to a user A). Then, the mobile phone 1 may notify the sound box 3 to be bound to the user A. Because the user A is a user who is first bound to the sound box 3, the user A has a primary control permission of the sound box 3, to authorize a control permission of the sound box 3 to a user B on the cloud platform, so that the cloud platform can bind the sound box 3 to the user B. Because the user B is not a user who is first bound to the sound box 3, the user B has a secondary control permission of the sound box 3. In this way, the user B may initiate control on the sound box 3 by using the mobile phone 2. In this case, the sound box 3 may determine, based on the binding relationship between the sound box 3 and the user A, that the user currently initiating the control is not the user having the primary control permission, that is, the user A, so that a control permission check can be periodically initiated to the user B. For example, for a periodicity, the sound box 3 may notify the mobile phone 2 to obtain a latest control key. After the mobile phone 2 receives the notification that is sent by the sound box 3 and that requires the mobile phone 2 to obtain the latest control key, the mobile phone 2 may request the cloud platform to determine the latest control key for the mobile phone 2. In this case, if the user A does not cancel the authorization of the control permission of the user B on the cloud platform, that is, the cloud platform still records the binding relationship between the sound box 3 and the user B, the cloud platform determines that the user B has the secondary control permission of the sound box 3, and the cloud platform determines the latest control key and sends the latest control key to the mobile phone 2. Therefore, the user B can continue to control the sound box 3 by using the mobile phone 2. On the contrary, if the user A has canceled the authorization of the control permission of the user B on the cloud platform, that is, the cloud platform has deleted the binding relationship between the sound box 3 and the user B, the cloud platform determines that the user B does not have the secondary control permission of the sound box3, and the cloud platform does not determine the latest control key. Therefore, the mobile phone 2 cannot obtain the latest control key. In this way, the sound box 3 may determine that the mobile phone 2 does not obtain the latest control key. For example, if the sound box 3 does not receive the latest control key from the mobile phone 2 within a specified period, the sound box 3 disconnects from the mobile phone 2.

Still using the foregoing example, in the device control method provided in embodiments of this application, the sound box 3 periodically initiates a control permission check to the mobile phone 2 (or the user B), to determine whether the mobile phone 2 currently still has the control permission of the sound box 3. If the sound box 3 determines that the mobile phone 2 currently does not have the control permission of the sound box 3, the sound box 3 actively disconnects from the mobile phone 2, to prevent the sound box 3 from being hijacked by the mobile phone 2. In an implementation, the sound box 3 may initiate the control permission check by notifying the mobile phone 2 to obtain the latest control key. However, in the device control method provided in embodiments of this application, devices that can determine the latest control key include the sound box 3 and the cloud platform, but do not include the mobile phone 2. Therefore, if the mobile phone 2 wants to obtain the latest control key, the mobile phone 2 needs to request the latest control key from the cloud platform, but cannot determine the latest control key. In addition, each time the user A of the mobile phone 1 cancels the authorization of the control permission of the sound box 3 to the user B, the user A synchronously notifies the cloud platform, so that the cloud platform can obtain in time information about whether the current user B still has the control permission of the sound box 3. In this way, when the cloud platform determines that the user B currently does not have the control permission of the sound box 3, even if the cloud platform receives a message sent by the mobile phone 2 for requesting the latest control key, the cloud platform does not send the latest control key to the mobile phone 2, or the cloud platform does not perform a step of determining the latest control key. Therefore, the mobile phone 2 cannot obtain the latest control key. In this case, the sound box 3 determines that the control permission check on the mobile phone 2 fails, and the sound box 3 actively disconnects from the mobile phone 2, so as to prevent the sound box 3 from being hijacked by the mobile phone 2.

Based on the foregoing descriptions of the overall procedure of the device control method provided in embodiments of this application, the following describes in detail several possible implementations of the device control method provided in embodiments of this application.

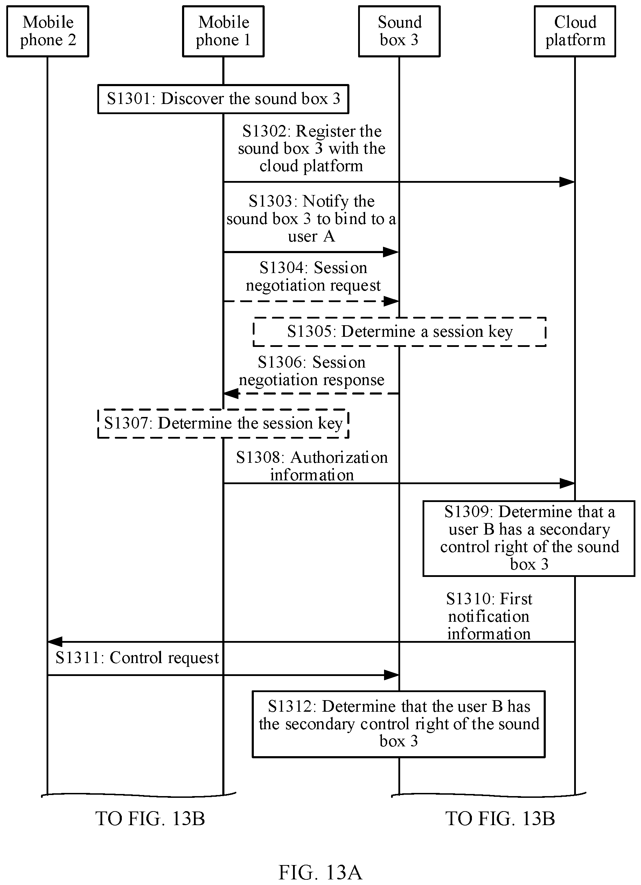

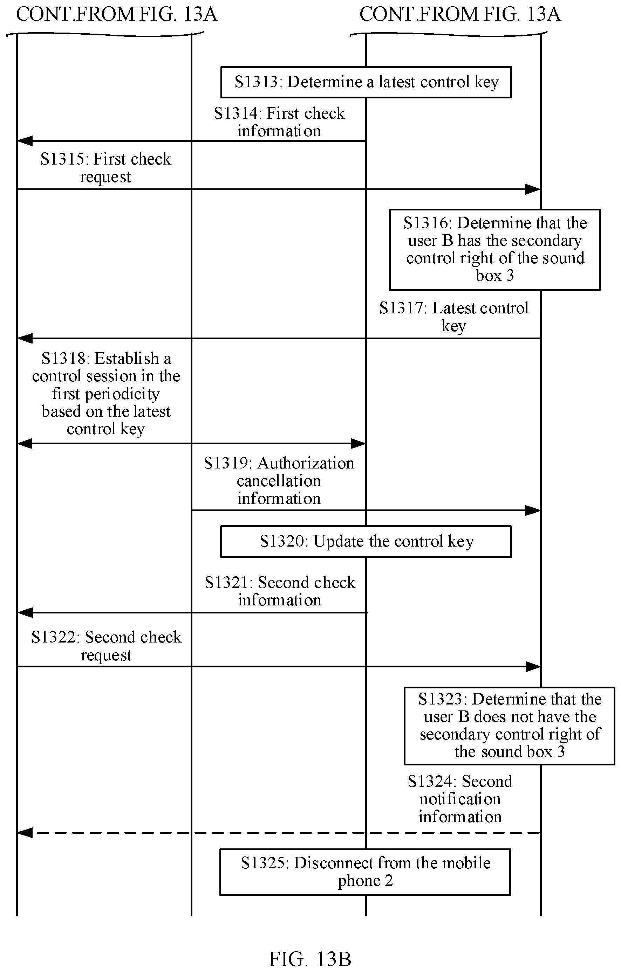

FIG. 13A and FIG. 13B are a schematic flowchart 1 of a device control method according to an embodiment of this application. As shown in FIG. 13A and FIG. 13B, a specific procedure of the device control method may include the following steps.

S1301: The mobile phone 1 discovers the sound box 3.

The mobile phone 1 may perform scanning, for example, through Bluetooth, Wi-Fi, or NFC, to discover the sound box 3, to obtain device information of the sound box 3. The device information may include at least one of the following: a device type, a device model, a device version, a device vendor, or the like. This is not limited in embodiments of this application.

S1302: The mobile phone 1 registers the sound box 3 with the cloud platform.

That the sound box 3 registers with the cloud platform may be that the cloud platform records the sound box 3, allocates a corresponding identifier to the sound box 3, and determines a control key of the mobile phone 1, for example, a key 1 (or a second control key). The key 1 may be used by the mobile phone 1 to establish a session (for example, a control session) with the sound box 3, so that the mobile phone 1 controls the sound box 3 by using the session. In addition, the key 1 may be used by the cloud platform to determine another control key, for example, a key 3 (or a first control key), and is used by a device (for example, the mobile phone 2) other than the mobile phone 1 to establish a session with the sound box 3, so that the another device controls the sound box 3 by using the session. For specific implementation, refer to S1313. Details are not described herein.

Specifically, the mobile phone 1 may send the device information of the sound box 3 and an identifier like an account identifier of the foregoing user A to the cloud platform. Correspondingly, the cloud platform may determine, based on the device information of the sound box 3, that the sound box 3 is an unregistered device, to allocate the identifier of the sound box 3 and the key 1 to the sound box 3, so as to complete registration of the sound box 3. Then, the cloud platform may establish a binding relationship between the user A and the sound box 3, for example, a correspondence between the identifier of the user A and the identifier of the sound box 3, to determine that the user A has a primary control permission of the sound box 3. In addition, the cloud platform may send the identifier of the sound box 3 and the key 1 to the mobile phone 1, for example, in a package or separately, so that the mobile phone 1 can also establish the binding relationship between the user A and the sound box 3.

S1303: The mobile phone 1 notifies the sound box 3 to be bound to the user A.

Because the sound box 3 is not bound to any user currently, when the mobile phone 1 completes registration, the mobile phone 1 may further notify the sound box 3 to be bound to the user A. For example, the mobile phone 1 sends the identifier of the user A, the identifier of the sound box 3, and the key 1 (which may be carried in second information) to the sound box 3, so that the sound box 3 can be accurately bound to a user based on the identifier of the user A and the identifier of the sound box 3, that is, establish the binding relationship between the user A and the sound box 3, for example, the correspondence between the identifier of the user A and the identifier of the sound box 3, thereby avoiding incorrect binding. In addition, the user A is a user who is first bound to the sound box 3, that is, a user who is first having a control permission (or the primary control permission) of the sound box 3. In this way, if another user wants to control the sound box 3 subsequently, the sound box 3 may initiate a control permission check to the another user based on the fact that the user A has the primary control permission, without initiating a control permission check to the user A, so as to avoid an incorrect check. To be specific, the sound box 3 may not initiate a control permission check to the user having the primary control permission.

S1304: The mobile phone 1 sends a session negotiation request to the sound box 3, and the sound box 3 receives the session negotiation request from the mobile phone 1.

The session negotiation request may be used to request the sound box 3 to cooperate with the mobile phone 1 to establish a control session (session), for example, a control session between the mobile phone 1 and the sound box 3, so that the mobile phone 1 can subsequently control the sound box 3 by using the control session. Specifically, the session negotiation request may include the identifier of the user A and a random number (random number, RN), for example, an RN 1. The RN 1 may be randomly generated by the mobile phone 1, and is used by the sound box 3 to generate a session key of the control session, for example, a key 2. For specific implementation, refer to related descriptions in S1305. Details are not described herein.

S1305: The sound box 3 determines the session key.

After receiving the session negotiation request, the sound box 3 may determine, based on the identifier of the user A in the session negotiation request and the established binding relationship between the user A and the sound box 3, an identity of the user A who currently requests to establish the control session, that is, the user who has the primary control permission of the sound box 3. In this way, the sound box 3 may determine the session key, for example, the key 2, based on the key 1, the RN 1 in the session negotiation request, and an RN 2. The RN 2 may be randomly generated by the sound box 3.

S1306: The sound box 3 sends a session negotiation response to the mobile phone 1, and the mobile phone 1 receives the session negotiation response from the sound box 3.

The session negotiation response may indicate that the sound box 3 has received the request of the mobile phone 1, and the sound box 3 may cooperate with the mobile phone 1 to establish the control session. The session negotiation response may include the RN 2.

It should be understood that an execution sequence of S1305 in which the sound box 3 determines the session key and S1306 in which the sound box 3 sends the session negotiation response is not limited.

S1307: The mobile phone 1 determines the session key.

After receiving the session negotiation response, the mobile phone 1 may determine the session key, for example, the key 2, based on the key 1, the RN 1, and the RN 2 in the session negotiation response. In this way, the mobile phone 1 and the sound box 3 have the same session key, and therefore it may be considered that the control session is established. Then, the mobile phone 1 and the sound box 3 may perform encrypted communication by using the key 2, so that the sound box 3 can perform a corresponding operation like audio playing or playing volume adjustment in response to control of the mobile phone 1.

It should be understood that S1304 to S1307 show an example manner of establishing the control session, and do not constitute a limitation. Another manner of establishing the control session is also applicable to embodiments of this application. For example, the mobile phone 1 and the sound box 3 may further establish the control session by using a secure remote password (secure remote password, SRP) protocol. Specifically, the key 1 may be considered as a password in the SRP protocol. In this way, the mobile phone 1 may determine an RN 3, and determine a public-private key pair, for example, a public key (public key) 1 and a private key (private key) 1, based on the RN 3 and the password. Likewise, the sound box 3 may determine an RN 4, and determine a public-private key pair, for example, a public key 2 and a private key 2, based on the RN 4 and the password. In this way, the mobile phone 1 and the sound box 3 may exchange respective public keys, so as to complete establishment of the control session.

In addition, S1304 to S1307 are optional steps. For example, after the mobile phone 1 is bound to the sound box 3, if the sound box 3 needs to be controlled or data needs to be transmitted to the sound box 3, S1304 to S1307 may be performed; or otherwise, S1304 to S1307 may not be performed.

S1308: The mobile phone 1 sends authorization information to the cloud platform, and the cloud platform receives the authorization information from the mobile phone 1.

The authorization information may indicate the mobile phone 1 to authorize the control permission of the sound box 3 to the user B, including: an identifier like an account identifier of the user B and the identifier of the sound box 3. The identifier of the user B may be an identifier prestored in the mobile phone 1, or may be an identifier obtained by the mobile phone 1 in real time, for example, the identifier of the user B that is input by the user A. In other words, the mobile phone 1 may send the identifier of the user B and the identifier of the sound box 3, to indicate to authorize the control permission of the sound box 3 to the user B.

In some implementations, execution of step S1308 is triggered by a user operation (for example, an operation of the user A) shown in FIG. 5(a) and FIG. 5(b) to FIG. 12(a) and FIG. 12(b).

S1309: The cloud platform determines that the user B has a secondary control permission of the sound box 3.

After receiving the authorization information, the cloud platform may determine, based on the identifier of the user B and the identifier of the sound box 3 in the authorization information, whether the user B has the primary control permission or the secondary control permission of the sound box 3. Because the cloud platform records the binding relationship (or a primary binding relationship) between the sound box 3 and the user A, that is, the user A has the primary control permission of the sound box 3, the cloud platform may determine that the user B has the secondary control permission of the sound box 3, and establish a binding relationship (or a secondary binding relationship) between the user B (for example, the identifier of the user B) and the sound box 3 (for example, the identifier of the sound box 3).

S1310: The cloud platform sends first notification information to the mobile phone 2, and the mobile phone 2 receives the first notification information from the cloud platform.

The first notification information may indicate that a device that needs to be controlled by the mobile phone 2 is the sound box 3, and may include the identifier of the sound box 3.

Optionally, the cloud platform may directly send the first notification information to the mobile phone 2, or may send the first notification information to the mobile phone 2 when the mobile phone 2 goes online, for example, when the mobile phone 2 logs in to the cloud platform. This is not limited herein.

S1311: The mobile phone 2 sends a control request to the sound box 3, and the sound box 3 receives the control request from the mobile phone 2.

The control request (or third information) may be used to request to control the sound box 3, and may include the identifier of the user B and the identifier of the sound box 3.

S1312: The sound box 3 determines that the user B has the secondary control permission.

Similar to the determining principle of the cloud platform, after receiving the control request, the sound box 3 may determine, based on the identifier of the user B in the control request, whether the user B has the primary control permission or the secondary control permission of the sound box 3. Because the sound box 3 has recorded the binding relationship between the sound box 3 and the user A, that is, the user A has the primary control permission of the sound box 3, the sound box 3 may determine that the user initiating the control is not the user who has the primary control permission of the sound box 3, that is, determine that the user B has the secondary control permission of the sound box 3. For the user who has the secondary control permission of the sound box 3, the sound box 3 needs to periodically initiate a control permission check for the user B to check whether the user B currently still has the secondary control permission of the sound box 3, so as to prevent the sound box 3 from being hijacked by the user B. For specific implementation, refer to related descriptions in S1313 to S1324. Details are not described herein.

S1313: The sound box 3 determines a latest control key.

The first periodicity is used as an example. Before the periodicity starts, for example, at a first preset time point before the periodicity starts, the sound box 3 may generate a check value, for example, randomly generate a check value 1, so that the sound box 3 determines the latest control key, for example, the key 3, based on the key 1, the identifier of the user B, and the check value 1, and the sound box 3 can determine, based on the key 3, whether the mobile phone 2 can obtain a same key, thereby checking the control permission of the user B.

S1314: The sound box 3 sends first check information to the mobile phone 2, and the mobile phone 2 receives the first check information from the sound box 3.

The first periodicity is still used as an example. Before the periodicity starts, for example, at a second preset time point before the periodicity starts, the sound box 3 sends the first check information (or first information) to the mobile phone 2, to notify the mobile phone 2 to obtain the latest control key, for example, the key 3. The first check information may further include the check value 1.

It should be understood that the first preset time point and the second preset time point may be the same or different. This is not limited herein.

S1315: The mobile phone 2 sends a first check request to the cloud platform, and the cloud platform receives the first check request from the mobile phone 2.

The first check request (or fourth information) may be used to request the cloud platform to determine the latest control key for the mobile phone 2. The first check request may include the check value 1, the identifier of the sound box 3, and the identifier of the user B. In addition, the first check request may be generated by the mobile phone 2 based on the first check information.

S1316: The cloud platform determines that the user B has the secondary control permission of the sound box 3.

After receiving the first check request, the cloud platform may determine, based on the identifier of the user B in the first check request, whether the user B has the secondary control permission of the sound box 3. Because the user A does not cancel the authorization of the control permission of the user B on the cloud platform, that is, the cloud platform still records the binding relationship between the user B and the sound box 3, the cloud platform determines that the user B has the secondary control permission of the sound box 3, to determine the latest control key, for example, the key 3, based on the key 1, the identifier of the user B, and the check value 1.

S1317: The cloud platform sends the latest control key to the mobile phone 2, and the mobile phone 2 receives the latest control key from the cloud platform.

In this way, the user B may continue to control the sound box 3 when the user B has the control permission of the sound box 3.

It should be understood that the sending in S1317 needs to be performed before the first periodicity starts. To be specific, in addition, a time interval between the second preset time point and a time point at which the first periodicity starts needs to meet the following condition: S1317 is performed before the first periodicity starts.

S1318: The mobile phone 2 and the sound box 3 establish the control session in the first periodicity based on the latest control key.

For specific implementation of S1318, refer to the related descriptions in S1305 to S1307. To be specific, a process of establishing the control session between the mobile phone 2 and the sound box 3 is similar to the process of establishing the control session between the mobile phone 1 and the sound box 3. This is not described herein again.

S1319: The mobile phone 1 sends authorization cancellation information to the cloud platform, and the cloud platform receives the authorization cancellation information from the mobile phone 1.

The authorization cancellation information may indicate that the user A needs to cancel the authorization of the control permission of the user B, and may include the identifier of the user A, the identifier of the user B, and the identifier of the sound box 3. In other words, the authorization cancellation information may indicate, by using the identifier of the user A, the identifier of the user B, and the identifier of the sound box 3, that the user A needs to cancel the authorization of the control permission of the sound box 3 of the user B. Correspondingly, based on the authorization cancellation information, the cloud platform may delete the binding relationship between the user B and the sound box 3, or determine that the user B no longer has the control permission of the sound box 3.

In some implementations, execution of step S1319 is triggered by a user operation (for example, an operation of the user A) shown in FIG. 10(b) or FIG. 12(b).

S1320: The sound box 3 updates the control key.

Before the second periodicity starts, for example, at a third preset time point before the second periodicity starts, that is, at a time point before the first periodicity ends, the sound box 3 may continue to generate a check value, for example, randomly generate a check value 2, to update the control key based on the key 1, the identifier of the user B, and the check value 2, for example, update the key 3 to a key 4. Therefore, the sound box 3 can determine, based on the key 4, whether the mobile phone 2 can obtain a same key, so as to continue to check the control permission of the user B.

S1321: The sound box 3 sends second check information to the mobile phone 2, and the mobile phone 2 receives the second check information from the sound box 3.

Before the second periodicity starts, for example, at a fourth preset time point before the second periodicity starts, that is, at a time point corresponding to the first periodicity, the sound box 3 may further send the second check information (or the first information) to the mobile phone 2, to notify the mobile phone 2 to obtain the latest control key, for example, the key 4. The second check information may further include the check value 2.

It should be understood that the third preset time point and the fourth preset time point may be the same or different. This is not limited herein.

S1322: The mobile phone 2 sends a second check request to the cloud platform, and the cloud platform receives the second check request from the mobile phone 2.

The second check request (or fourth information) may be used to request the cloud platform to determine the latest control key for the mobile phone 2. The second check request may further include the check value 2, the identifier of the sound box 3, and the identifier of the user B. In addition, the second check request may be generated by the mobile phone 2 based on the second check information.

In addition, an execution sequence of S1319 and S1320 to S1322 is not limited. In other words, S1319 may occur before S1323, that is, the authorization of the control permission of the user B may be canceled before the cloud platform determines the latest control key.

S1323: The cloud platform determines that the user B does not have the secondary control permission of the sound box 3.

After receiving the second check request, the cloud platform may determine, based on the identifier of the user B in the second check request, whether the user B still has the secondary control permission of the sound box 3. It can be learned from the related descriptions in S1319 that, because the user A has canceled the authorization of the control permission of the user B on the cloud platform, that is, the binding relationship between the user B and the sound box 3 has been deleted, the cloud platform may determine that the user B does not have the control permission of the sound box 3.

It should be understood that, if the cloud platform determines that the user B does not have the control permission of the sound box 3, the cloud platform does not generate the latest control key (for example, the key 4), so as to avoid generating the latest control key by mistake. For example, when the user A cancels the authorization, the cloud platform still generates the latest control key.

S1324: The cloud platform sends second notification information to the mobile phone 2, and the mobile phone 2 receives the second notification information from the cloud platform.

The second notification information may indicate that the user B does not have the secondary control permission of the sound box 3.

It should be understood that S1324 is an optional step, that is, the cloud platform may actively indicate that the user B does not have the secondary control permission of the sound box 3; or may not give an indication. In this way, the mobile phone 2 may determine, based on a timeout, for example, based on the fact that the control key is still not received from the cloud platform when the second periodicity starts, that the user B does not have the secondary control permission of the sound box 3.

S1325: The sound box 3 disconnects from the mobile phone 2.

If the sound box 3 determines that the mobile phone 2 does not obtain the key 4, for example, the key 4 is still not received from the mobile phone 2 when the second periodicity starts, the sound box 3 determines that the user B does not have the secondary control permission of the sound box 3, to actively disconnect from the mobile phone 2, so as to cooperate with the mobile phone 1 to cancel the authorization.

In addition, in some other implementations, the mobile phone 2 may alternatively actively disconnect from the sound box 3, for example, disconnect from the mobile phone 2 based on the second notification information.

It should be noted that, in the procedure shown in FIG. 13A and FIG. 13B, because the key 1 is locally stored in the sound box 3 and the cloud platform separately, neither the sound box 3 nor the cloud platform sends the key 1 to the mobile phone 2, and the mobile phone 2 does not obtain the key 1, the mobile phone 2 cannot determine the latest control key (for example, the key 3 or the key 4) based on the key 1, so as to prevent the mobile phone 2 from hijacking the sound box 3 because the mobile phone 2 determines the latest control key when having no control permission, thereby improving authorization reliability.

It should be understood that a method for determining the latest control key by the sound box 3 and the cloud platform may be different from the method shown in the embodiment in FIG. 13A and FIG. 13B as an example. To be specific, the key 3 may not be determined based on the key 1, the identifier of the user B, and the check value 1, and the key 4 may not be determined based on the key 1, the identifier of the user B, and the check value 2. The key 3 and the key 4 may alternatively be determined based on a method different from the method shown in the embodiment in FIG. 13A and FIG. 13B as an example. A manner of determining the key 3 and the key 4 is not limited in embodiments of this application. Any control key determining manner in which the control key can be determined by the sound box 3 and the cloud platform but cannot be determined by the mobile phone 1 does not fall beyond a coverage scope of embodiments of this application. In other words, if a method for determining a control key can enable the sound box 3 and the cloud platform to have a capability of determining a control key, and enable the mobile phone 2 not to have a capability of determining a control key, the method for determining a control key does not fall beyond the coverage scope of embodiments of this application.

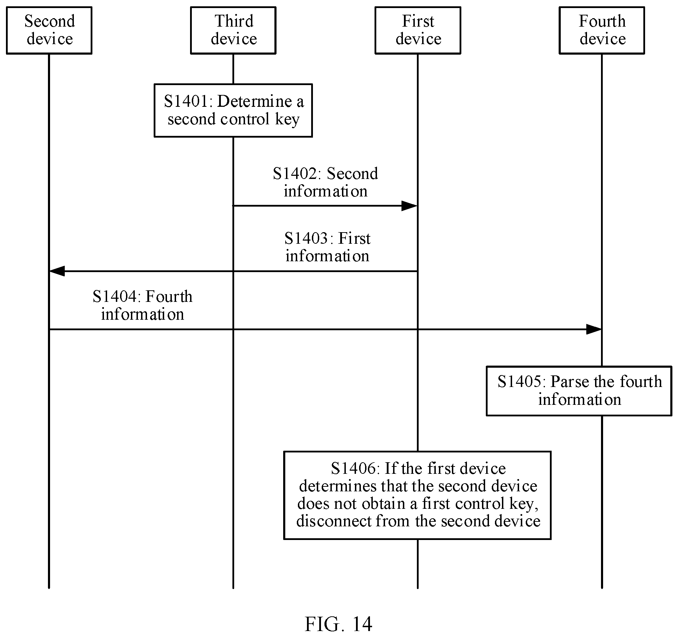

FIG. 14 is a schematic flowchart 2 of a device control method according to an embodiment of this application. As shown in FIG. 14, the device control method may be applied to a first device (the foregoing sound box 3), a second device (the foregoing mobile phone 2), a third device (the foregoing mobile phone 1), and a fourth device (the foregoing cloud platform). A specific procedure may include the following steps.

S1401: The third device determines a second control key.

The second control key is used by the third device to establish a session (for example, a control session) with the first device, so that the third device can control the first device by using the session. In addition, the second control key is further used by the first device to determine a first control key, and the first control key is used by a device other than the third device to establish a session with the first device, so that the device other than the third device can control the first device by using the session.

In an optional manner, the third device may receive the second control key from the fourth device, or the third device may determine the second control key. This is not limited herein.

S1402: The third device sends second information to the first device, and the first device receives the second information from the third device.

The second information includes the second control key, and the second information indicates the first device to be bound to the third device. In this way, the first device may be bound to the third device based on the second information. For example, if the first device determines, based on the second information, that a correspondence with the first device is not established, that is, the first device is not currently bound to another device, a first correspondence between the first device and the third device is established, that is, the third device is bound. In other words, the third device is a device that is first bound to the first device, that is, a device that is first having a control permission (or a primary control permission) of the first device. In this way, if another device wants to control the first device subsequently, the first device may initiate a control permission check to the another device based on the fact that the third device has the primary control permission, instead of initiating a control permission check to the third device, so as to avoid an incorrect check.

In an implementation of binding the first device to the third device, the second information may further include an identifier of the third device and an identifier of a first user. In this way, the first device may be accurately bound to, based on the second information, a device to which the first device is to be bound, for example, by establishing the first correspondence between the identifier of the third device and an identifier of a user corresponding to the third device, for example, the identifier of the first user, to avoid incorrect binding. In addition, it should be noted that, that the first device is bound to the third device is that the first device is bound to the identifier of the first user (for example, an account of the first user) corresponding to the third device. In this case, if the first user logs in to a same account by using different devices, the first user may still control the first device by using the binding relationship with the first user, without performing re-registration and re-binding, so as to improve user experience.

It should be understood that, after the third device sends the second information to the first device, the third device may further send fifth information to the fourth device. The fifth information indicates the third device to authorize the control permission of the first device to the second device.

In this way, the fourth device may bind the first device to the second device based on the fifth information, to determine that the second device has the control permission of the first device. Specifically, the fourth device may determine a second correspondence between the first device and the second device based on the fifth information. The second correspondence may indicate that an identifier of the first device corresponds to an identifier of a second user. In other words, that the first device is bound to the second device is that the first device is bound to the identifier of the first user (for example, an account of the second user) corresponding to the second device. In this case, if the second user logs in to a same account by using different devices, the second user may still control the first device by using the binding relationship with the second user, and the first user does not need to perform re-authorization, so as to improve user experience.

In addition, the fourth device may further notify the second device, so that the second device can send third information to the first device. The third information may be used by the second device to request to control the first device, and may include the identifier of the second user and the identifier of the first device. The second user may be a user corresponding to the second device.

S1403: The first device sends first information to the second device, and the second device receives the first information from the first device.

The first information is used to notify the second device to obtain the first control key, or is used by the first device to initiate a control permission check to the second device. The first information may include a check value, and the check value may be used to determine the first control key.

Specifically, because the first device is bound to the third device, after receiving the third information, the first device may determine that the identifier of the second user corresponding to the identifier of the first device in the third information is different from the identifier of the first user corresponding to the identifier of the first device in the first correspondence, to determine that the second device is not a device that is first having the control permission of the first device, so as to determine to initiate a control permission check to the second device, instead of initiating a control permission check to another device, thereby avoiding an incorrect check.

S1404: The second device sends fourth information to the fourth device, and the fourth device receives the fourth information from the third device.

The fourth information is used to request the fourth device to determine the first control key. The fourth information may include the identifier of the first device, the identifier of the second user, and the check value.

S1405: The fourth device parses the fourth information.

The fourth device may determine, based on the fourth information, whether the second device has the control permission of the first device.

Specifically, when the fourth device stores the foregoing first correspondence, the fourth device may determine that the identifier of the second user corresponding to the identifier of the first device in the fourth information is different from the identifier of the first user corresponding to the identifier of the first device in the first correspondence, so as to determine that the second user is not a device that is first having a control permission of the first device. In this way, the fourth device may further determine whether the second user has the control permission of the first device, or whether the first user cancels authorization of the control permission of the first device, so as to determine, based on whether the first device cancels the authorization, whether to generate the second control key, thereby avoiding generating the second control key by mistake, for example, avoiding a case in which the second control key is still generated when the first device cancels the authorization.

For example, before determining whether the second user has the control permission of the first device, the second device receives sixth information from the first device. The sixth information may indicate the third device to cancel the authorization of the control permission of the first device to the second device. Correspondingly, the fourth device may cancel binding between the first device and the second device based on the sixth information, for example, delete a second correspondence between the first device and the second device. In this way, when the second device determines whether the second user has the control permission of the first device, the second device may determine, based on the fact that the first device is not bound to the second device, that the second device does not have the control permission of the first device, and therefore does not determine the first control key for the second device, so that the second device cannot continue to control the first device, thereby preventing the second device from hijacking the first device. Optionally, the fourth device may send seventh information to the second device, to indicate that the second device does not have the control permission of the first device.

S1406: If the first device determines that the second device does not obtain the first control key, the first device disconnects from the second device.

It should be understood that S1405 and S 1406 are described by using an example in which the second device does not have the control permission of the first device. However, this does not constitute a limitation. For example, if the second device does not receive the sixth information from the first device before determining whether the second user has the control permission of the first device, the fourth device determines that the second device has the control permission of the first device, that is, the first device is bound to the second device, so as to determine the first control key, for example, determine the first control key based on the check value, the second control key, and the identifier of the second user. In this way, the fourth device may send the first control key to the second device, so that the second device forwards the first control key to the first device.

Further, the first device may alternatively determine the first control key based on the check value, the second control key, and the identifier of the second user. Therefore, the first device may determine that the first control key from the second device is the same as the first control key determined by the first device, so as to determine that the second device obtains the first control key, and keep being connected to the second device. In this way, the second device can continue to control the first device when having the control permission of the first device.

It should be further understood that, because the second control key is locally stored in the first device and the fourth device separately, and neither the first device nor the fourth device sends the second control key to the second device, the second device cannot determine the first control key, so as to prevent the second device from hijacking the first device because the second device determines the first control key when having no control permission.

In conclusion, based on the device control method in FIG. 14, it can be learned that, when an IoT device (for example, the first device) is bound to a device (for example, the third device), that is, the third device has the control permission of the first device, if another device like the second device wants to continue to control the first device, the first device may initiate a control permission check to the second device, that is, send the first information, to indicate the second device to obtain a latest control key (for example, the first control key). In this way, if the second device does not obtain the first control key, that is, does not have the control permission of the first device, the first device may disconnect from the second device, so as to prevent the first device from being hijacked by the second device.

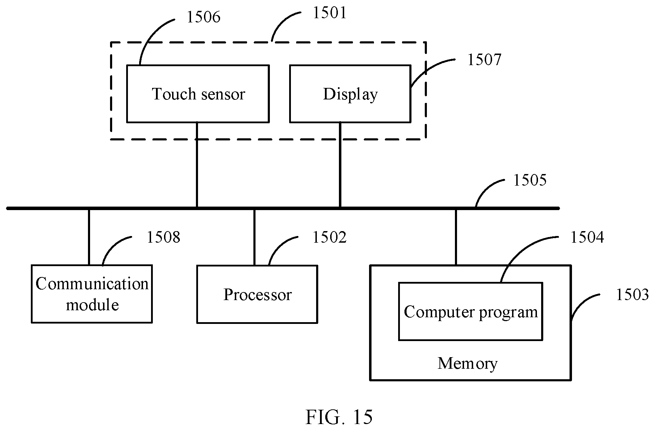

Refer to FIG. 15. An embodiment of this application discloses an electronic device, for example, the mobile phone 1, the mobile phone 2, or the sound box 3 in the foregoing embodiment. The electronic device may specifically include a display 1507, one or more processors 1502, a memory 1503, a communication module 1508, one or more applications (not shown), and one or more computer programs 1504. The foregoing components may be connected by using one or more communication buses 1505. The one or more computer programs 1504 are stored in the memory 1503 and are configured to be executed by the one or more processors 1502. The one or more computer programs 1504 include instructions, and the instructions may be used to perform related steps performed by the mobile phone in the foregoing embodiment. The electronic device may further include an input device like a touch sensor 1506 (the touch sensor 1506 and the display 1507 may be integrated into a touchscreen 1501) or a mouse.

For example, an embodiment of this application discloses a chip system. The chip system is applied to an electronic device including a memory and a communication module. The chip system includes one or more interface circuits and one or more processors. The interface circuit and the processor are interconnected by using a line. The interface circuit is configured to receive a signal from the memory of the electronic device, and send the signal to the processor, where the signal includes computer instructions stored in the memory. When the processor executes the computer instructions, the electronic device performs the foregoing device control method.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

**In** this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The foregoing descriptions about implementations allow a person skilled in the art to understand that, for the purpose of convenient and brief description, division into the foregoing functional modules is used as an example for illustration. **In** actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, like a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A device control method, comprising:
periodically sending, by a first device (101), first information to a second device (102), wherein the first device (101) is bound to a third device (103), the first information is used to notify the second device (102) to obtain a first control key, and the first control key is a latest control key used by the second device (102) to establish a session with the first device (101); and
if the first device (101) determines that the second device (102) does not obtain the first control key, disconnecting from the second device (102);
wherein before the sending, by a first device (101), first information to a second device (102), the method further comprises:
receiving, by the first device (101), second information from the third device (103), wherein the second information indicates that the first device (101) is to be bound to the third device (103); and
being bound, by the first device (101), to the third device (103) based on the second information.

2. The method according to claim 1, wherein the being bound, by the first device (101), to the third device (103) based on the second information comprises:
determining, by the first device (101) based on the second information, that a correspondence with the first device (101) is not established; and
establishing, by the first device (101), a first correspondence between the first device (101) and the third device (103).

3. The method according to claim 2, wherein the second information comprises an identifier of the first device (101), an identifier of a first user, and a second control key, wherein the first user is a user corresponding to the third device (103), the correspondence with the first device (101) is a correspondence between the identifier of the first device (101) and an identifier of a user, the first correspondence is a correspondence between the identifier of the first device (101) and the identifier of the first user, and the second control key is used by the third device (103) to establish a session with the first device (101).

4. The method according to any one of claims 1 to 3, wherein before the sending, by a first device (101), first information to a second device (102), the method further comprises:
receiving, by the first device (101), third information from the second device (102), wherein the third information is used by the second device (102) to request to control the first device (101).

5. The method according to claim 4, wherein the third information comprises an identifier of a second user and the identifier of the first device (101), and the second user is a user corresponding to the second device (102).

6. The method according to any one of claims 1 to 2, wherein the first information comprises a check value, and the check value is used to determine the first control key.

7. The device control method according to claim 6, wherein the first control key is determined based on the check value, a second control key, and an identifier of a second user, the second control key is used by the third device (103) to establish a session with the first device (101), and the second user is a user corresponding to the second device (102).

8. A device control method, comprising:
periodically receiving, by a second device (102), first information from a first device (101), wherein the first information is used to notify the second device (102) to obtain a first control key, and the first control key is a latest control key used by the second device (102) to establish a session with the first device (101); and
sending, by the second device (102), fourth information to a fourth device (104), wherein the fourth information is used to request the fourth device (104) to determine the first control key;
wherein the first information comprises a check value, and the check value is used by the fourth device (104) to determine the first control key;
wherein the fourth information comprises an identifier of the first device (101), an identifier of a second user, and the check value, and the second user is a user corresponding to the second device (102).

9. The method according to claim 8, wherein after the sending, by the second device (102), fourth information to a fourth device (104), the method further comprises:
receiving, by the second device (102), the first control key from the fourth device (104); and
sending, by the second device (102), the first control key to the first device (101).

10. The method according to any one of claims 8 to 9, wherein before the receiving, by a second device (102), first information from a first device (101), the method further comprises:
sending, by the second device (102), third information to the first device (101), wherein the third information is used by the second device (102) to request to control the first device (101).

11. The method according to claim 10, wherein the third information comprises the identifier of the second user and the identifier of the first device (101), and the second user is the user corresponding to the second device (102).

12. An electronic device, wherein the electronic device comprises:
one or more processors (310);
a memory (320); and
a communication module, wherein
the memory stores one or more computer programs, the one or more computer programs comprise instructions, and when the instructions are executed by the electronic device, the electronic device is enabled to perform the method according to any one of claims 1 to 7, or the method according to any one of claims 8 to 11.

13. A computer-readable storage medium, wherein the computer-readable storage medium stores instructions, and when the instructions are run on an electronic device, the electronic device is enabled to perform the method according to any one of claims 1 to 7, or the method according to any one of claims 8 to 11.

14. A computer program product, wherein the computer program product comprises a computer program or instructions, and when the computer program or the instructions are run on a computer, the computer is enabled to perform the method according to any one of claims 1 to 7, or the method according to any one of claims 8 to 11.

15. A chip system, wherein the chip system is applied to an electronic device comprising a memory (320) and a communication module; the chip system comprises one or more interface circuits and one or more processors (310); the interface circuit and the processor (310) are interconnected by using a line; the interface circuit is configured to receive a signal from the memory (320) of the electronic device, and send the signal to the processor (310), wherein the signal comprises computer instructions stored in the memory (320); and when the processor (310) executes the computer instructions, the electronic device performs the method according to any one of claims 1 to 7, or the method according to any one of claims 8 to 11.

## Patentansprüche

1. Verfahren zur Gerätesteuerung, umfassend:
periodisches Senden, durch ein erstes Gerät (101), erster Informationen an ein zweites Gerät (102), wobei das erste Gerät (101) an ein drittes Gerät (103) gebunden ist, die ersten Informationen dazu verwendet werden, das zweite Gerät (102) zu benachrichtigen, einen ersten Steuerschlüssel zu erlangen, und der erste Steuerschlüssel ein neuester Steuerschlüssel ist, der durch das zweite Gerät (102) dazu verwendet wird, eine Sitzung mit dem ersten Gerät (101) aufzubauen; und
falls das erste Gerät (101) bestimmt, dass das zweite Gerät (102) den ersten Steuerschlüssel nicht erlangt, Trennen von dem zweiten Gerät (102);
wobei das Verfahren vor dem Senden, durch ein erstes Gerät (101), erster Informationen an ein zweites Gerät (102) ferner Folgendes umfasst:
Empfangen, durch das erste Gerät (101), zweiter Informationen von dem dritten Gerät (103), wobei die zweiten Informationen angeben, dass das erste Gerät (101) an das dritte Gerät (103) zu binden ist; und
Gebundenwerden, durch das erste Gerät (101), an das dritte Gerät (103) basierend auf den zweiten Informationen.

2. Verfahren nach Anspruch 1, wobei das Gebundenwerden, durch das erste Gerät (101), an das dritte Gerät (103) basierend auf den zweiten Informationen Folgendes umfasst:
Bestimmen, durch das erste Gerät (101) basierend auf den zweiten Informationen, dass eine Entsprechung mit dem ersten Gerät (101) nicht aufgebaut ist; und
Aufbauen, durch das erste Gerät (101) einer ersten Entsprechung zwischen dem ersten Gerät (101) und dem dritten Gerät (103).

3. Verfahren nach Anspruch 2, wobei die zweiten Informationen eine Kennung des ersten Geräts (101), eine Kennung eines ersten Benutzers und einen zweiten Steuerschlüssel umfassen, wobei der erste Benutzer ein Benutzer ist, der dem dritten Gerät (103) entspricht, die Entsprechung mit dem ersten Gerät (101) eine Entsprechung zwischen der Kennung des ersten Geräts (101) und einer Kennung eines Benutzers ist, die erste Entsprechung eine Entsprechung zwischen der Kennung des ersten Geräts (101) und der Kennung des ersten Benutzers ist und der zweite Steuerschlüssel durch das dritte Gerät (103) dazu verwendet wird, eine Sitzung mit dem ersten Gerät (101) aufzubauen.

4. Verfahren nach einem der Ansprüche 1 bis 3, wobei das Verfahren vor dem Senden, durch ein erstes Gerät (101), erster Informationen an ein zweites Gerät (102) ferner Folgendes umfasst:
Empfangen, durch das erste Gerät (101), dritter Informationen von dem zweiten Gerät (102), wobei die dritten Informationen durch das zweite Gerät (102) dazu verwendet werden, anzufordern, das erste Gerät (101) zu steuern.

5. Verfahren nach Anspruch 4, wobei die dritten Informationen eine Kennung eines zweiten Benutzers und die Kennung des ersten Geräts (101) umfassen und der zweite Benutzer ein Benutzer ist, der dem zweiten Gerät (102) entspricht.

6. Verfahren nach einem der Ansprüche 1 bis 2, wobei die ersten Informationen einen Prüfwert umfassen und der Prüfwert dazu verwendet wird, den ersten Steuerschlüssel zu bestimmen.

7. Verfahren zur Gerätesteuerung nach Anspruch 6, wobei der erste Steuerschlüssel basierend auf dem Prüfwert, einem zweiten Steuerschlüssel und einer Kennung eines zweiten Benutzers bestimmt wird, der zweite Steuerschlüssel durch das dritte Gerät (103) dazu verwendet wird, eine Sitzung mit dem ersten Gerät (101) aufzubauen, und der zweite Benutzer ein Benutzer ist, der dem zweiten Gerät (102) entspricht.

8. Verfahren zur Gerätesteuerung, umfassend:
periodisches Empfangen, durch ein zweites Gerät (102), erster Informationen von einem ersten Gerät (101), wobei die ersten Informationen dazu verwendet werden, das zweite Gerät (102) zu benachrichtigen, einen ersten Steuerschlüssel zu erlangen, und der erste Steuerschlüssel ein neuester Steuerschlüssel ist, der durch das zweite Gerät (102) dazu verwendet wird, eine Sitzung mit dem ersten Gerät (101) aufzubauen; und
Senden, durch das zweite Gerät (102), vierter Informationen an ein viertes Gerät (104), wobei die vierten Informationen dazu verwendet werden, das vierte Gerät (104) aufzufordern, den ersten Steuerschlüssel zu bestimmen;
wobei die ersten Informationen einen Prüfwert umfassen und der Prüfwert durch das vierte Gerät (104) dazu verwendet wird, den ersten Steuerschlüssel zu bestimmen;
wobei die vierten Informationen eine Kennung des ersten Geräts (101), eine Kennung eines zweiten Benutzers und den Prüfwert umfassen und der zweite Benutzer ein Benutzer ist, der dem zweiten Gerät (102) entspricht.

9. Verfahren nach Anspruch 8, wobei das Verfahren nach dem Senden, durch das zweite Gerät (102), vierter Informationen an ein viertes Gerät (104) ferner Folgendes umfasst:
Empfangen, durch das zweite Gerät (102), des ersten Steuerschlüssels von dem vierten Gerät (104); und
Senden, durch das zweite Gerät (102), des ersten Steuerschlüssels an das erste Gerät (101).

10. Verfahren nach einem der Ansprüche 8 bis 9, wobei das Verfahren vor dem Empfangen, durch ein zweites Gerät (102), erster Informationen von einem ersten Gerät (101) ferner Folgendes umfasst:
Senden, durch das zweite Gerät (102), dritter Informationen an das erste Gerät (101), wobei die dritten Informationen durch das zweite Gerät (102) dazu verwendet werden, anzufordern, das erste Gerät (101) zu steuern.

11. Verfahren nach Anspruch 10, wobei die dritten Informationen die Kennung des zweiten Benutzers und die Kennung des ersten Geräts (101) umfassen und der zweite Benutzer der Benutzer ist, der dem zweiten Gerät (102) entspricht.

12. Elektronisches Gerät, wobei das elektronische Gerät Folgendes umfasst:
einen oder mehrere Prozessoren (310);
einen Speicher (320); und
ein Kommunikationsmodul, wobei
der Speicher ein oder mehrere Computerprogramme speichert, das eine oder die mehreren Computerprogramme Anweisungen umfassen und, wenn die Anweisungen durch das elektronische Gerät ausgeführt werden, es dem elektronischen Gerät ermöglicht wird, das Verfahren nach einem der Ansprüche 1 bis 7 oder das Verfahren nach einem der Ansprüche 8 bis 11 durchzuführen.

13. Computerlesbares Speichermedium, wobei das computerlesbare Speichermedium Anweisungen speichert und, wenn die Anweisungen auf einem elektronischen Gerät laufen, es dem elektronischen Gerät ermöglicht wird, das Verfahren nach einem der Ansprüche 1 bis 7 oder das Verfahren nach einem der Ansprüche 8 bis 11 durchzuführen.

14. Computerprogrammprodukt, wobei das Computerprogrammprodukt ein Computerprogramm oder Anweisungen umfasst und, wenn das Computerprogramm oder die Anweisungen auf einem Computer laufen, es dem Computer ermöglicht wird, das Verfahren nach einem der Ansprüche 1 bis 7 oder das Verfahren nach einem der Ansprüche 8 bis 11 durchzuführen.

15. Chipsystem, wobei das Chipsystem auf ein elektronisches Gerät, umfassend einen Speicher (320) und ein Kommunikationsmodul, angewandt wird; das Chipsystem einen oder mehrere Schnittstellenschaltkreise und einen oder mehrere Prozessoren (310) umfasst; der Schnittstellenschaltkreis und der Prozessor (310) unter Verwendung einer Leitung miteinander verbunden sind; der Schnittstellenschaltkreis dazu konfiguriert ist, ein Signal von dem Speicher (320) des elektronischen Geräts zu empfangen und das Signal an den Prozessor (310) zu senden, wobei das Signal Computeranweisungen umfasst, die in dem Speicher (320) gespeichert sind; und, wenn der Prozessor (310) die Computeranweisungen ausführt, das elektronische Gerät das Verfahren nach einem der Ansprüche 1 bis 7 oder das Verfahren nach einem der Ansprüche 8 bis 11 durchführt.

## Revendications

1. Procédé de commande de dispositif, comprenant :
l'envoi périodique, par un premier dispositif (101), de premières informations à un deuxième dispositif (102), dans lequel le premier dispositif (101) est lié à un troisième dispositif (103), les premières informations sont utilisées pour notifier le deuxième dispositif (102) d'obtenir une première clé de commande, et la première clé de commande est une dernière clé de commande utilisée par le deuxième dispositif (102) pour établir une session avec le premier dispositif (101) ; et
si le premier dispositif (101) détermine que le deuxième dispositif (102) n'obtient pas la première clé de commande, la déconnexion du deuxième dispositif (102) ;
dans lequel avant l'envoi, par un premier dispositif (101), de premières informations à un deuxième dispositif (102), le procédé comprend également :
la réception, par le premier dispositif (101), de deuxièmes informations à partir du troisième dispositif (103), dans lequel les deuxièmes informations indiquent que le premier dispositif (101) doit être lié au troisième dispositif (103) ; et
la liaison, par le premier dispositif (101), au troisième dispositif (103) sur la base des deuxièmes informations.

2. Procédé selon la revendication 1, dans lequel la liaison, par le premier dispositif (101), au troisième dispositif (103) sur la base des deuxièmes informations comprend :
la détermination, par le premier dispositif (101) sur la base des deuxièmes informations, qu'une correspondance avec le premier dispositif (101) n'est pas établie ; et
l'établissement, par le premier dispositif (101), d'une première correspondance entre le premier dispositif (101) et le troisième dispositif (103).

3. Procédé selon la revendication 2, dans lequel les deuxièmes informations comprennent un identifiant du premier dispositif (101), un identifiant d'un premier utilisateur, et une seconde clé de commande, dans lequel le premier utilisateur est un utilisateur correspondant au troisième dispositif (103), la correspondance avec le premier dispositif (101) est une correspondance entre l'identifiant du premier dispositif (101) et un identifiant d'un utilisateur, la première correspondance est une correspondance entre l'identifiant du premier dispositif (101) et l'identifiant du premier utilisateur, et la seconde clé de commande est utilisée par le troisième dispositif (103) pour établir une session avec le premier dispositif (101).

4. Procédé selon l'une quelconque des revendications 1 à 3, dans lequel avant l'envoi, par un premier dispositif (102), de premières informations à un deuxième dispositif (102), le procédé comprend également :
la réception, par le premier dispositif (101), de troisièmes informations à partir du deuxième dispositif (102), dans lequel les troisièmes informations sont utilisées par le deuxième dispositif (102) pour demander la commande du premier dispositif (101).

5. Procédé selon la revendication 4, dans lequel les troisièmes informations comprennent un identifiant d'un second utilisateur et l'identifiant du premier dispositif (101), et le second utilisateur est un utilisateur correspondant au deuxième dispositif (102).

6. Procédé selon l'une quelconque des revendications 1 à 2, dans lequel les premières informations comprennent une valeur de contrôle, et la valeur de contrôle est utilisée pour déterminer la première clé de commande.

7. Procédé de commande de dispositif selon la revendication 6, dans lequel la première clé de commande est déterminée sur la base de la valeur de contrôle, d'une seconde clé de commande, et d'un identifiant d'un second utilisateur, la seconde clé de commande est utilisée par le troisième dispositif (103) pour établir une session avec le premier dispositif (101), et le second utilisateur est un utilisateur correspondant au deuxième dispositif (102).

8. Procédé de commande de dispositif, comprenant :
la réception périodique, par un deuxième dispositif (102), de premières informations à partir d'un premier dispositif (101), dans lequel les premières informations sont utilisées pour notifier le deuxième dispositif (102) d'obtenir une première clé de commande, et la première clé de commande est une dernière clé de commande utilisée par le deuxième dispositif (102) pour établir une session avec le premier dispositif (101) ; et
l'envoi, par le deuxième dispositif (102), de quatrièmes informations à un quatrième dispositif (104), dans lequel les quatrièmes informations sont utilisées pour demander au quatrième dispositif (104) de déterminer la première clé de commande ;
dans lequel les premières informations comprennent une valeur de contrôle, et la valeur de contrôle est utilisée par le quatrième dispositif (104) pour déterminer la première clé de commande ;
dans lequel les quatrièmes informations comprennent un identifiant du premier dispositif (101), un identifiant d'un second utilisateur, et la valeur de contrôle, et le second utilisateur est un utilisateur correspondant au deuxième dispositif (102).

9. Procédé selon la revendication 8, dans lequel après l'envoi, par le deuxième dispositif (102), de quatrièmes informations à un quatrième dispositif (104), le procédé comprend également :
la réception, par le deuxième dispositif (102), de la première clé de commande à partir du quatrième dispositif (104) ; et
l'envoi, par le deuxième dispositif (102), de la première clé de commande au premier dispositif (101).

10. Procédé selon l'une quelconque des revendications 8 à 9, dans lequel avant la réception, par un deuxième dispositif (102), de premières informations à partir d'un premier dispositif (101), le procédé comprend également :
l'envoi, par le deuxième dispositif (102), de troisièmes informations au premier dispositif (101), dans lequel les troisièmes informations sont utilisées par le deuxième dispositif (102) pour demander la commande du premier dispositif (101).

11. Procédé selon la revendication 10, dans lequel les troisièmes informations comprennent l'identifiant du second utilisateur et l'identifiant du premier dispositif (101), et le second utilisateur est l'utilisateur correspondant au deuxième dispositif (102).

12. Dispositif électronique, dans lequel le dispositif électronique comprend :
un ou plusieurs processeurs (310) ;
une mémoire (320) ; et
un module de communication, dans lequel
la mémoire stocke un ou plusieurs programmes informatiques, les un ou plusieurs programmes informatiques comprennent des instructions, et lorsque les instructions sont exécutées par le dispositif électronique, le dispositif électronique est activé pour réaliser le procédé selon l'une quelconque des revendications 1 à 7, ou le procédé selon l'une quelconque des revendications 8 à 11.

13. Support de stockage lisible par ordinateur, dans lequel le support de stockage lisible par ordinateur stocke des instructions, et lorsque les instructions sont exécutées sur un dispositif électronique, le dispositif électronique est activé pour réaliser le procédé selon l'une quelconque des revendications 1 à 7, ou le procédé selon l'une quelconque des revendications 8 à 11.

14. Produit de programme informatique, dans lequel le produit de programme informatique comprend un programme informatique ou des instructions ; et lorsque le programme informatique ou les instructions sont exécutées sur un ordinateur, l'ordinateur est activé pour réaliser le procédé selon l'une quelconque des revendications 1 à 7, ou le procédé selon l'une quelconque des revendications 8 à 11.

15. Système de puce, dans lequel le système de puce est appliqué à un dispositif électronique comprenant une mémoire (320) et un module de communication ; le système de puce comprend un ou plusieurs circuits d'interface et un ou plusieurs processeurs (310) ; le circuit d'interface et le processeur (310) sont interconnectés en utilisant une ligne ; le circuit d'interface est configuré pour recevoir un signal à partir de la mémoire (320) du dispositif électronique et envoyer le signal au processeur (310), dans lequel le signal comprend des instructions informatiques stockées dans la mémoire (320) ; et lorsque le processeur (310) exécute les instructions informatiques, le dispositif électronique réalise le procédé selon l'une quelconque des revendications 1 à 7 ou le procédé selon l'une quelconque des revendications 8 à 11.
